# EUROPEAN PATENT SPECIFICATION

(11) **EP 0 634 588 B1**
(45) Date of publication and mention of the grant of the patent: **28.05.2003**
(21) Application number: 94304652.4
(22) Date of filing: 27.06.1994
(51) Int. Cl.: F16F 15/00, F03G 7/10

(54) **Rotating body and machine that uses it**
Rotationskörper und Maschine die ihn benutzt
Corps rotationel et machine qui l'utilise

(30) Priority: 14.07.1993 JP 19681793; 16.05.1994 JP 12700894
(43) Date of publication of application: 18.01.1995
(73) Proprietor: NEWSTEIN LAB., INC., Yokohama-shi, Kanagawa 232 (JP)
(72) Inventor: Suganuma, Noriyuki, Yokohama-shi, Kanagawa 232 (JP)
(74) Representative: Bond, Bentley George

(56) References cited:
- FEYNMAN, LEIGHTON, SANDS: "The Feynman Lectures on Physics" February 1977 , ADDISON-WESLEY , READING, MA (USA) XP002017216 * page 18-1 - page 20-8 *

## Description

### Background of the Invention

### Field of the Invention

This invention relates to a rotating body that performs rotating motion or rocking motion, and to a machine that uses at least one such rotating body. The machine defined in this patent includes a wide variety of mechanisms, machines, and mechanical equipment.

### Description of Prior Art

The prior art of reducing the power lost during operation of a rotating body that performs rotating motion or rocking motion, or a machine that uses at least one such rotating body covers many various technical fields such as reducing the weight of components, improving the mechanism, and improvement of heat loss.

However, theoretical background related to the improvement of dynamic losses of a rotating body caused by inertia forces that are generated due to rotating motion or rocking motion has been full of blank areas.

Power defined by dynamics is expressed as the product of the two vector quantities: force and the velocity of the point where the force acts. In other words, if the vectors of the two physical quantities mentioned above are perpendicular to each other, the power required to move the body is no longer there.

Until now, it has been thought that the power related to the inertia force, including the centrifugal force, generated in a rotating body due to circular motion or rotating motion disappears as described above. The reason for this is the mistake of thinking that the two vectors, inertia force and the velocity of the point on which it acts, are perpendicular.

This invention relates to the technical range that up until now has not been completely made clear, and improves the power losses caused by inertia forces generated by the rotation of a rotating body.

Formerly, the unnecessary power lost in a rotating body of a machine that is in operation, was the cause of harmful heat generation, and required the use of cooling equipment to relieve this problem, or increased mechanism strength, increased weight, and increased cost necessary for coping with the inertia force.

### Summary of the Invention

The objective of this invention is to partially solve the aforementioned problems of the prior art, and to provide a rotating body and a machine that uses at least one such rotating body that reduces the unnecessary power losses.

In more particular, the objective of this invention is to provide a rotating body and a machine that uses at least one such rotating body, and that by taking the axis of center of the rotating motion or rocking motion of the rotating body as the X-axis, reduces or essentially makes zero the deviation of the principal axis of inertia, which is the difference between the partial center of gravity and the partial principal axis of inertia of a section of the rotating body that is perpendicular to the aforementioned X-axis of the rotating body.

This deviation of the principal axis of inertia is the cause of the unnecessary inertia forces that are generated by the rotation of the rotating body.

The means for accomplishing the objective of this invention will be explained using five forms of the invention.

The rotating body, which performs rotating motion or rocking motion, related to the first form of this invention is characterized by the center axis of rotation or rocking motion of the rotating body being the X-axis, and where at any arbitrary point in the rotating body along the X-axis, an arbitrary fan-shaped radial sector, having a small angle and thickness Ax can be taken such that it is perpendicular to the X-axis, and where its mass distribution is such that its partial axis of center of gravity, which is parallel to the X-axis, essentially matches its partial principal axis of inertia.

For this kind of rotating body, in the aforementioned fan-shaped sector located at an arbitrary point along the X-axis, which is the center axis of rotation, the deviation of the principal axis of inertia, which is the difference between the partial axis of center of gravity and the partial principal axis of inertia, is essentially made zero or is greatly reduced as described below. In this invention, this first basic form will be referred to as the ideal type or case.

An example of an ideal type rotating body is the rotor of an electric motor where the rotating shaft and rotor are made of a material having the same density, and where the rotor is a solid inner rotor as will be described later. For this rotor, the center of rotation is the center of the rotating shaft, and the center of rotation is supported in a fixed place by multiple bearings.

Another example of an ideal type rotating body is an ideal type connecting rod for a multi-cylinder reciprocating engine as described in the preferred embodiments. This ideal type connecting rod has rocking motion caused by the up and down motion of a piston, and the center of rotation is the center of its small end.

For this ideal type connecting rod, there are cases where the deviation of the principal axis of inertia cannot be made completely zero.

For example, if the density of the material used in the basic structure of the connecting rod is different than density of the material used in the small or large end, or in the bearings, it is not possible to make the deviation of the principal axis of inertia completely zero.

Also, in order that the connecting rod does not contact the cylinder during operation, there are cases when it is not possible to select a shape where the deviation of the principal axis of inertia becomes zero. For example, there is a case when it is necessary that the inside diameter of the large end of the connecting rod to be made relatively large compared to the inside diameter of the cylinder.

In the ideal type connecting rods of the two examples described above, there is a fan-shaped section, and the deviation of the principal axis of inertia, measured according to the method of this invention described later, can be reduced to less than half of that of connecting rods using the prior art even in cases where it is not possible to make it zero, and these cases are also included in this invention.

Therefore, in this invention, in regards to the ideal type connecting rods of the two examples mentioned above, it is considered that the mass distribution is such that the partial axis of center of gravity essentially matches the partial principal axis of inertia.

The rotating body, which performs rotating motion or rocking motion, related to the second form of this invention is characterized by the center axis of rotation or rocking motion of the rotating body being the X-axis, and where an arbitrary fan-shaped radial sector having a small angle, and whose thickness is the total thickness of the rotating body along the X-axis, can be taken such that it is perpendicular to the X-axis and where its mass distribution is such that its partial axis of center of gravity, which is parallel to the X-axis, essentially matches its partial principal axis of inertia.

For this kind of rotating body, in the aforementioned fan-shaped sector whose entire thickness runs along the X-axis, which is the center axis of rotation, the deviation of the principal axis of inertia, which is the difference between the partial axis of center of gravity and the partial principal axis of inertia, is essentially made zero or is greatly reduced as described below. In this invention, this second basic form will be referred to as the real type or case.

An example of a real type rotating body is the rotor of an electric motor where the rotating shaft and the rotor are made of materials having different densities, and where the rotor is an inner rotor as will be described later.

This real type rotor differs from the aforementioned ideal case in that it is characterized by essentially making the deviation of the principal axis of inertia zero for its entire width along the X-axis.

Another example of a real type rotating body is a real type connecting rod for a single-cylinder reciprocating, which has rocking motion, as described later in the preferred embodiments of the invention.

As in the case of the ideal type connecting rod mentioned above, there are cases where it is impossible to make the deviation of the principal axis of inertia completely zero.

However, when compared to a connecting rod according to the prior art, the deviation of principal axis of inertia, can be essentially reduced to half or less, and so this kind of real type connecting rod is also included within the range of this invention.

Therefore, in this invention, the aforementioned real type connecting rod is considered to be a rotating body whose mass distribution is such that the partial axis of center of gravity essentially matches the partial principal axis of inertia.

The rotating body related to the third form of this invention is characterized by the center axis of rotation of the rotating body being the X-axis, and where part of the rotating body has an eccentric axis that is parallel to the X-axis of the rotating body, and where an arbitrary fan-shaped radial sector, having a small angle and thickness is Δx, can be taken such that it is perpendicular to the eccentric axis and the peak point of said radial sector intersects the eccentric axis that rotates around the X-axis of the rotating body, and where its mass distribution is such that its partial axis of center of gravity, which is parallel to the eccentric axis, essentially matches its partial principal axis of inertia.

In this kind of rotating body, the rotating portion, which is the rotating shaft, whose center of rotation is the X-axis, is ideal, and the portion of the eccentric rotor is ideal with respect to the eccentric axis.

As an example, an eccentric shaft of a reciprocating-type compressor is described in the preferred embodiments.

The rotating body of the fourth form of this invention is characterized by the center of rotation of the rotating body being the X-axis, and where there is a fan-shaped rotating portion that runs along the X-axis of the rotating body, and where an arbitrary fan-shaped radial sector, having a small angle and thickness Δx, can be taken such that it is perpendicular to the X-axis of this fan-shaped rotating portion, and whose mass distribution is such that its partial axis of center of gravity, which is parallel to the X-axis, essentially matches its partial principal axis of inertia.

This kind of rotating body has a fan-shaped rotating portion that runs along the X-axis, which is the axis of rotation of the rotating body, and this fan-shaped rotating portion is ideal.

As an example, the crankshaft for a multi-cylinder reciprocating engine is described later as a preferred embodiment.

The aforementioned fan-shaped portion of the rotating body includes, the crank arm section and balancing weight section of the aforementioned crankshaft.

The rotating body of the fifth form of this invention is characterized by the center of rotation of the rotating body being the X-axis, and where there is a fan-shaped rotating portion that runs along the X-axis of the rotating body, where an arbitrary fan-shaped radial sector that intersects the X-axis, and whose thickness is the total thickness of the fan-shaped rotating portion, can be taken such that it is perpendicular to the X-axis of this fan-shaped rotating portion, and whose mass distribution is such that its partial axis of center of gravity, which is parallel to the X-axis, essentially matches its partial principal axis of inertia.

This kind of rotating body has a fan-shaped rotating portion that runs along the X-axis, which is the axis of rotation of the rotating body, and this fan-shaped rotating portion is real.

As an example, a crankshaft for a single-cylinder reciprocating engine is described later as a preferred embodiment. The aforementioned fan-shaped portion of the rotating body includes the crank arm and balancing weight of the aforementioned crankshaft.

The rotating bodies of the five forms explained by this invention, conform to at least one of the six items below.
(a) A rotating body that has a two-way energy conversion function between electrical energy and mechanical energy.
(b) A rotating body with multiple vanes or blades, to be used in the movement, compression, conversion of force, or conversion of power of a fluid such as air, steam, gas, combustible matter, water, or oil.
(c) A rotating body used in a mechanism that converts between linear motion and rotating motion.
(d) A rotating body used in a rotating mechanism of a prime mover or compressor.
(e) A rotating body whose axis of rotation is the center of the rotating shaft, and where the shaft has a power transmission function.
(f) A rotating body that has rotating motion and that is supported by multiple bearings.

The rotating body of this invention, constructed according to this invention as described above, essentially makes zero or greatly reduces the power lost caused by the deviation of the principal axis of inertia mentioned above, and maintains its rotating or rocking motion.

Also, in a machine that uses at least one such rotating body, the power lost during operation due to the deviation of the principal axis of inertia, is essentially zero or is greatly reduced.

The action corresponding to the five forms of this invention are explained in order below.

For the ideal type rotating body of the first form of this invention, in the rotating portion with arbitrary minute thickness that is perpendicular to the X-axis, which is the center axis or rotation, there is essentially no power lost due to the deviation of the principal axis of inertia, or it is greatly reduced.

For the real type rotating body of the second form of this invention, in the rotating portion whose entire thickness is perpendicular to the X-axis, which is the center axis of rotation, there is essentially no power lost due to the deviation of the principal axis of inertia, or it is greatly reduced.

In this kind of real type rotating body, as it will be described later, when it is possible to consider that the rotating body is essentially a rigid body, the power lost due to the rotating or rocking motion is the same as for the aforementioned ideal type rotating body.

For the rotating body of the third form of this invention, in the rotating portion with an arbitrary minute thickness that is perpendicular to the X-axis, which is the center axis of rotation, there is essentially no power lost due to the deviation of the principal axis of inertia.

In this kind of rotating body, the deviation of the principal axis of inertia, including the portion of the eccentric rotor, is essentially zero.

However, in the portion of the eccentric rotor, there is no way to avoid the centrifugal force or well known couple moment caused by the deviation of the center of gravity.

For the rotating body of the fourth form of this invention, in the rotating portion, which has an arbitrary minute thickness and which is perpendicular to the X-axis, which is the center axis of rotation, there is essentially no power lost due to the deviation of the principal axis of inertia.

In this kind of rotating body, including the fan-shaped rotating portion, the deviation of the principal axis of inertia is essentially zero.

However, in multiple fan-shaped rotating portions, there is no way to avoid couple moment that is caused by the deviation of the center of gravity.

For the rotating body of the fifth form of this invention, in the rotating portion whose total thickness is perpendicular to the X-axis, which is the center axis of rotation, there is essentially no power lost due to the deviation of the principal axis of inertia.

In this kind of rotating body, there is no way to avoid the centrifugal force when there is only one fan-shaped rotating portion, and there is no way to avoid the couple moment when there are multiple fan-shaped rotating portions.

### Brief Description of the Drawings

Fig. 1 is a drawing explaining the basic theory of this invention using a system of particles where two particles are located on the end of a rigid rod whose mass can be ignored;
Fig. 2 is a drawing explaining the basic theory of this invention using a system of particles where four particles are attached to a rigid rod whose mass can be ignored;
Fig. 3 is a drawing explaining the basic theory of this invention using a system of particles where six particles are attached to two rigid rods whose mass can be ignored, and where system A is connected to system B by a rigid shaft that runs along axis 06;
Fig. 4 is a pictorial view showing an inner rotor of an embodiment of this invention, and explains the basic configuration of this invention;
Fig. 5 is the side view (a) and the front view (b) of the radial sector used in explaining the basic theory of this invention;
Fig. 6 is the front view of the hollow cylindrical shaft and ring used in explaining the basic theory of this invention;
Fig. 7 is an electrical circuit diagram of the device used in measuring the period of a rotating body of this invention;
Fig. 8 is a pictorial view of the device used in measuring the period of a rotating body of this invention;
Fig. 9 is a pictorial view (a) and front view (b) showing an ideal type inner rotor of an embodiment of this invention;
Fig. 10 is a pictorial view showing an ideal type outer rotor of an embodiment of this invention;
Fig. 11 is a side view (a) and front view (b) showing a real type cage rotor of an embodiment of this invention;
Fig. 12 is a cross-sectional view A-A of the real type cage rotor of an embodiment of this invention shown in the side view (a) of Fig. 11;
Fig. 13 is a side view (a) and front view (b) showing an ideal type pulley of an embodiment of this invention;
Fig. 14 is a pictorial view showing a real type spur gear of an embodiment of this invention;
Fig. 15 is a partial front view showing an ideal type turbine of an embodiment of this invention;
Fig. 16 is a front view (a) and side view (b) used to explain the shape of the blades of an ideal type turbine of an embodiment of this invention;
Fig. 17 is a partial front view showing ideal type turbine blades with a shroud ring attached of an embodiment of this invention;
Fig. 18 is a side view (a) and a cross-sectional view A-A (b) of the side view (a) showing an ideal type compressor impeller of an embodiment of this invention;
Fig. 19 is a side view (a) and front view (b) showing an eccentric rotor of an embodiment of this invention;
Fig. 20 is a front view (a) and side view (b) of an ideal type connecting rod of an embodiment of this invention;
Fig. 21 is a front view (a) and side view (b) of a real type connecting rod of an embodiment of this invention;
Fig. 22 is a side view of a 5-bearing crankshaft of an embodiment of this invention;
Fig. 23 are cross-sectional views A-A (a) and B-B (b) of the side view in Fig. 22 showing a 5-bearing crankshaft of an embodiment of this invention;
Fig. 24 is a pictorial view showing a real type single-cylinder crankshaft of an embodiment of this invention;
Fig. 25 is a side view showing a real type single-cylinder crankshaft of an embodiment of this invention;
Fig. 26 is a drawing showing the adjustment method of performing dynamic balance of an unbalanced rotating body using the prior art for a radial impeller of a turbo charger of a gasoline engine;
Fig. 27 is an enlarged side view (a) and cross-sectional view A-A (b) of the side view (a) of the journal section shown in the side view of Fig. 22, and shows the shape of the lubrication oil holes.

### Description of the Preferred Embodiments

The embodiments of the rotating body of this invention and a machine that uses at least one such rotating body will be explained first based on the dynamical background of related to the functional theory of the rotating body.

In dynamics, if a body is moved due to a force that is acting on it, that force is defined to have performed work, and the rate at which that work is performed is defined as the power.

In other words, power is expressed as a scalar that is the inner product of the force and the velocity at which the point that the force acts on moves, which are vector quantities.

As was explained previously, this invention essentially makes zero or greatly reduces the power lost in a rotating body that is caused by the inertia force.

In the prior art, there was the mistake of thinking that the inner product of the two vector quantities, which are internal force in the body due to rotation of the body, and the velocity of the point on which the inertia force acted, was zero.

As an example of the theoretical contradictions of this mistake, the mechanical vibrations caused by the rotation of the rotating body in an electric motor or engine were not thought of as being power loss.

According to Newton's laws of motion, the two vectors of a force acting on a body, and the velocity at which the body is moved by the force, coincide.

If the aforementioned mechanical vibrations are caused by action of the centrifugal force, the two vectors of the mechanical vibration and the centrifugal force coincide, and it must be regarded as being power lost.

If, on the other hand, this power lost is denied, then at the same time, Newton's laws of motion must also be denied. However, there are no rational grounds for doing so, therefore, it must be concluded that the mechanical vibration accompanies power lost.

Next, the circular motion of a body will be explained in more detail.

First, imagine a particle m being secured to the end of a rigid bar whose mass can be neglected, and the particle is forced to rotate at a constant velocity around a stationary axis, with the radius being r, and the angular velocity being ω.

In order to rotate the particle m, a torque, T = rN, must be applied.

In other words, when a external tangential vector force N is applied to particle m, and the velocity that the particle m is caused to move at by the tangential vector is taken to be v, the power required to cause the particle m to move linearly can be expressed as, P = Nv = Tv/r.

This particle m, which is trying to be moved linearly in the tangential direction by the torque T, is pulled back toward the center of the circular motion around a circumference of radius r by the rigid bar.

When this happens, as defined by dynamics, a centripetal force, caused by changing the motion of the body, acts upon the particle m.

This centripetal force, F, is expressed as, F = mrω², and the velocity of particle m due to the centripetal force F is s = rω, and is a physical quantity of the normal vector facing the center of the circular motion.

In this circular motion, the centripetal force F can be considered to be the acting force, for either the case when the product of inertia of particle m, as seen from the center of the circular motion, is mr², or when particle m moves with constant circular motion and has a deviation of the center of gravity r.

The power P required to continuously keep particle m moving at a constant angular velocity ω, is equal to the power L required to move particle m at a constant circular speed, and can be expressed as, P = L = mr²ω³.

In the consideration relating to power mentioned above, it is possible to consider the fictious centrifugal force in the place of the centripetal force of the coordinate system attached to particle m.

Also, by analyzing the circular motion of the single particle m, described above, the following dynamical interpretation is possible.

First, if the circular motion of the rotating body satisfies the law of conservation of angular momentum, there is no power loss. In other words, if there is no power lost in conditions where it is possible to neglect the losses due to friction and air resistance, then a rotating body that is starting to rotate will continue to rotate forever.

Second, if the inertia forces occurring inside the rotating body due to the rotation can be considered, then in order to forcibly cause the rotating body to continue rotating, an external force must be applied to the body.

Or, paradoxically speaking, in conditions where it is possible to neglect losses due to friction and air resistance, if power is required to forcibly cause the rotating body to continue rotating, then it is possible to consider that internal inertia forces are acting on the rotating body.

The circular motion of a single particle was explained above, however, below, multiple particles forming a single system of particles will be explained, where the system of particles is rigid and the relative position of the particles in the system does not change, and there is relative action of the forces between the multiple particles.

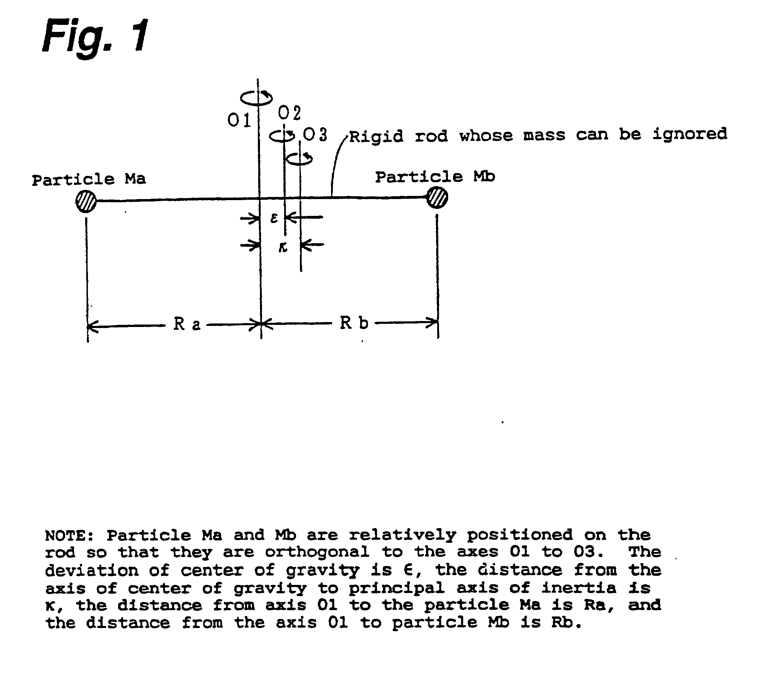

First, consider the circular motion of the system around the axis O1, as shown in Fig. 1.

In this case, Ma = Mb, and Ra = Rb, and axis O1 coincides with the center of gravity of the system.

In other words, axis O1 coincides with the principal axis of inertia where the product of inertia for the system is zero.

In this case, for the rotation of this system around axis O1, the product of inertia of the system can be considered to be zero, as well as the deviation of the axis of center of gravity is zero, therefore, there is no centrifugal force acting on the system.

That is, in this system where the angular velocity is taken to be ω, the two centrifugal forces are, Ma * Ra * ω², and Mb * Rb * ω², and they cancel each other.

Here, there is no centrifugal force or centripetal force acting on the system of particles, and so the angular momentum is conserved, and it can be considered that there is no power lost.

It is possible explain this with an example of a well balanced top that continues to spin for a long time.

Next, the case as shown in Fig. 1, where the conditions, Ma = Mb and Ra = Rb, are satisfied, and the axis O1 coincides with the axis of center of gravity, but where the axis of rotation, O2, has deviated from the center of gravity a distance ε toward Mb, will be explained.

The value of the product of inertia of the system around the axis of rotation O2 is - (Ma + Mb) ε², and so when the axis O2 is the axis of rotation, and the system is forcibly caused to continue rotating at angular velocity (ω, a centrifugal force vector, Fa = -(Ma + Mb) εω², in the direction of particle Ma occurs at axis O1, and as the direction of the vector changes with the rotation of the system, it acts on axis O2.

Also, the power required when this happens can be expressed as, Pa = (Ma + Mb) ε² ω².

In the system of particles shown in Fig. 1 where the equations, Ma * Ra = Mb * Rb, and Ma (Ra + κ)² = Mb (Rb - κ)², are satisfied, the cases when axis O1 and axis O3 are taken to be the axis of rotation are explained below.

When axis O3 is the axis of rotation, the product of inertia of the system around axis O3 is zero, and the deviation of the axis of center of gravity is ε= κ. Here, the centrifugal force, Fb = -(Ma + Mb)κ ω², is a vector in direction of particle Ma and occurring at axis O1, and as the direction of the vector changes with the rotation of the system, the force acts on axis O3.

In the case where the axis O1 is the axis of rotation, the value of the product of inertia of the system around axis O1 is, - (Ma + Mb) κ², and the deviation of the axis of center of gravity is zero.

The concept of the inertia force, which differs from the centrifugal force, that occurs in the system of particles due to the rotation, is a vector force in the direction of particle Ma, and can be expressed as, Fc = - (Ma + Mb)κ ω², and based on the theory of action and reaction, as the vector changes direction due to rotation, the force acts on axis O1.

Therefore, in accordance to the inertia forces Fb or Fc mentioned above, the power that must be added to keep the system of particles rotating at a constant velocity, can be expressed as, Pb = (Ma + Mb)κ² ω³.

Also, when Fb = Fc, and the axis of rotation is between axis O1 and axis O3, the inertia force acting on that axis of rotation has the same value as Fb or Fc.

The concept of the inertia force Fc, which differs from the centrifugal force caused by the deviation of the center of gravity ε, is an inertia force that is caused by the deviation of the principal axis of inertia κ, and it is sometimes referred to as the deviated force.

The inertia forces, Fa, Fb, and Fc, (inertia force Fd which will be described later is omitted) which are the cause of the vibrations due to the rotation of the rotating body, can be reduced by using a well known technique for adjusting the imbalance of the rotating body.

This technique for "balancing rotating bodies" is widely used as an effective means for reducing harmful mechanical vibrations that are caused by centrifugal forces occurring in the mass portion of a rotating body during rotation.

This technique is described in more detail in specifications such as JIS standards B0905, "Benefits of Balanced Rotating Machinery", and standards IS01940, "Balance Quality of Rotating Rigid Bodies".

This method of balancing rotating bodies is applied to the rotating bodies of this invention.

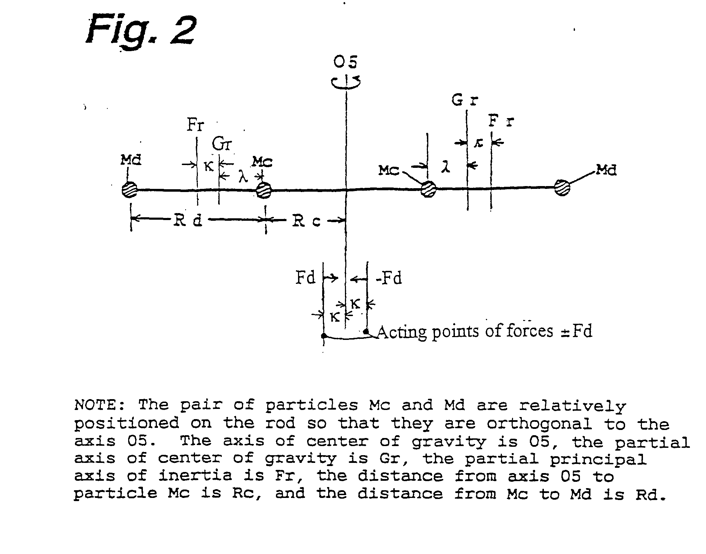

Next, using Fig. 2, the dynamical background related to internal power loss of a rotating body will be explained.

The system of particles in this case, comprises two particles, Mc, relatively spaced on the right and left side of axis O5, and separated from axis O5 by a distance, Rc, and two particles, Md, relatively spaced on the right and left side of axis O5, and separated from axis O5 by a distance, (Rc + Rd).

In the case where the masses of particles Mc and Md are different, when the system of particles is forced to rotate around axis O5, the axis of center of gravity and principal axis of inertia both coincide with the axis O5, and no centrifugal force acts on the system.

However, the inertia force caused by the deviation of the principal axis of inertia, κ, which is the difference between the partial axis of center of gravity Gr, and the partial principal axis of inertia Fr, must be considered.

If the mass of particles Mc > Md, then the location of the partial axis of center of gravity Gr, is closer to particle Mc with respect to the partial principal axis of inertia Fr, and if the mass of particles Mc < Md, then the location is just the opposite.

If the system of particles continues to be rotated around axis O5 at a constant angular velocity ω, and if the mass of particles Mc > Md, the pair of inertia forces on the right and left are opposing vectors expressed by the physical quantity, +/- Fd = (Mc + Md)κ ω², and they do not cause vibration of the axis of rotation, axis O5, but act internally on the system of particles.

This pair of inertia forces, are caused by the relative action of the particles of the system due to rotation, and they are an "internal attraction force" vectors facing toward axis O5. As the direction of the vectors changes with the rotation of the system, they act internally on the system.

Also, if the mass of the particles Mc < Md, the pair of inertia forces, +/- Fd, on the left and right, and they are "internal repulsion forces" that repel each other. As the direction of the vectors changes with the rotation of the system, they act internally on the system.

Since there is no centrifugal force corresponding to (Rc + λ), from the concept of the point where the aforementioned inertia forces, Fb and Fc, act, the point where these inertia forces act is at the deviation of the principal axis of inertia, separated a distance κ from axis O5.

Also, the power required to keep the system of particles rotating at a constant velocity can be expressed as, Pc = 2Fd κω = 2 (Mc + Md)κ² ω³.

Under conditions of angular acceleration, if the initial angular velocity is ω1 and the angular acceleration is ϕ, then the equation, ω = (ω1 + ϕt), and be substituted into the above equation, and the required power can be calculated.

However, if the mass of Mc = Md, then the deviation of the principal axis of inertia κ = 0, and the deviated force Fd = 0, and therefore the power Pc = 0.

On the systems of particles described above based on Fig. 1 and Fig. 2, the power required due to the deviated force caused by the rotation of the system has been described.

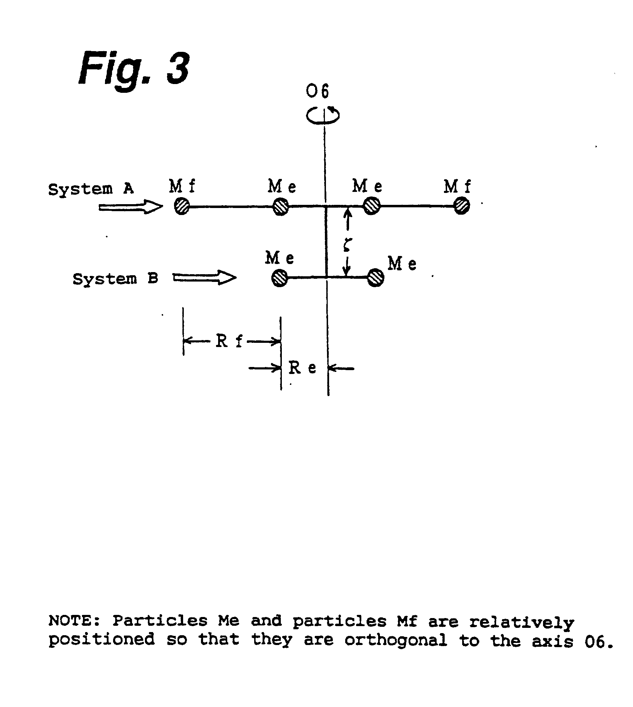

Next, the theoretical background of a real type rotating body will be explained based on Fig.3.

The system of particles shown in Fig. 3 comprises a system A made up of a pair each of particles Me and Mf located symmetrically with respect to axis O6, and a system B which is separated from system A by a distance ζ, and which is made up of a pair of particles Me positioned symmetrically around axis O6.

Systems A and B are joined together by a rigid rod, whose mass can be neglected, that runs along axis O6.

For this system of particles, the mass of the particles is such that 2Me = Mf, the deviation of the axis of center of gravity ε= 0, and the deviation of the principal axis of inertia κ= 0.

However, when an angular acceleration, ϕ, is applied to the system, a moment (torque), called the "twisting force", caused by the difference in the moment of inertia of system A and system B occurs, and can be expressed by the equation, S = 2Mf (Re + Rf)²ϕ.

This is the characteristic difference between the ideal type and the real type.

This twisting force acts between system A and system B which are separated by the distance ζ, however if the system of particles is considered to be rigid, this force does not affect the power lost.

The rotating body of an actual machine is not perfectly rigid, however, the power lost due to the aforementioned twisting force is extremely small, and generally can be neglected.

In all of the aforementioned mass systems, geometrical points have been handled as having mass, and from a dynamical aspect this is most abstract way to look at a body. Also, the system of particles has been described as taking multiple particles as one set.

Below, the rotating body of this invention, will be explained as being a continuous body made up of infinite number of particles.

The first embodiment of this invention to be described, is the ideal type and real type inner-rotor type rotor of an electric motor.

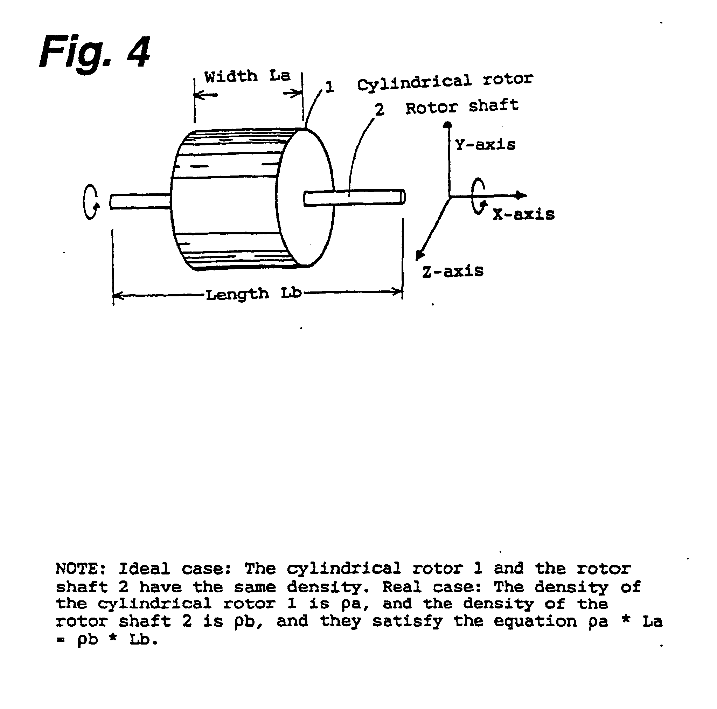

Fig. 4 shows the most basic form of such a rotor. It is an ideal type solid inner rotor of an electric motor where the cylindrical rotor 1 and rotor shaft 2 are made of material having the same density, and where the rotor shaft 2 is fixed to the center of the cylindrical rotor 1, or they are made in one piece of a material having the same density.

If this rotor 1 is magnetized, it could also be used as the rotor in a generator.

Also, if this basic form is used as is, it could be used as an ideal type flywheel.

Fig. 4 also shows another basic form.

This is a real type solid inner rotor having a rotor with a material density ρa and a width La along the X-axis, and a rotor shaft 2, with a material density ρb and a width Lb along the X-axis, and it satisfies the equation ρa*La = ρb*Lb. The material of the rotor shaft 2 is not limited to being metal.

First, in the case of the aforementioned ideal type rotor, the X-axis is the center of rotation, and in any arbitrary YZ plane that crosses the X-axis, the mass distribution of that plane is such that the deviation of the principal axis of inertia is essentially zero.

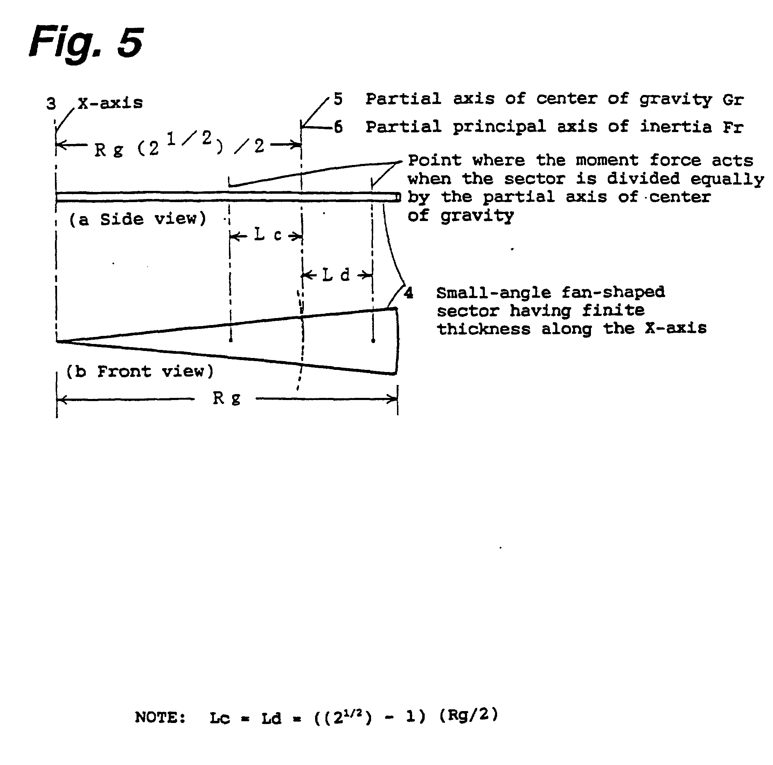

This will be explained in more detail using Fig. 5. At an arbitrary point along the X-axis 3 of the ideal type rotor, there is a fan-shaped radial sector 4 having a very small thickness and radius Rg, and the partial axis of center of gravity of this sector Gr5 is located at a position {Rg(2^{1/2})/2} from the X-axis 3.

When the area of this sector is equally divided by the radial arc {Rg(2^{1/2})/2}, the distances from the partial axis of center of gravity Gr 5 to the points in each division where the moment is applied, are Lc and Ld, and they are equal and are expressed as (2^{1/2}- 1)(Rg/2).

The partial principal axis of inertia Fr 6, which coincides with the product of the squares of mass and distances of the pair of radial sectors equally divided by the axis of center of gravity Gr 5, is located at a position {Rg (2^{1/2})/2}. In other words, the position of both Gr5 and Fr6 match.

Also, even if these equally divided sectors are divided again into two sectors of equal mass, or are repeatedly divided, the position of Gr and Fr of the divided portions will match.

In this case, the deviation of the principal axis of inertia κ = 0, or in other words, there is no deviation of the principal axis of inertia anywhere in the rotor.

In other words, in the case of a rotating body such as a sphere, disk, or hollow cylinder, which one of the axes of center of gravity and one of the principal axes of inertia are matching at an axis, which is the center of rotation, as described in the case of the ideal type rotor, the deviation of the principal axis of inertia κ = 0.

In another case of a real type rotor, a cylindrical rotor 1 and a rotor shaft 2 are made of materials having differing densities, the partial axis of center of gravity Gr and the partial principal axis of inertia Fr do not match along the portion where these components fit together.

However, for the total thickness of a YZ plane which crosses the X-axis, the partial axis of center of gravity Gr and partial principal axis of inertia Fr match, and Gr and Fr match for any further divided sections as well. Therefore, in this case, the deviation of the principal axis of inertia κ = 0.

In the case of this real type rotor, in the section where the cylindrical rotor 1 and rotor shaft 2 come together, there is a "twisting force", which corresponds to the angular acceleration, between the rotor and the shaft due to the change in load.

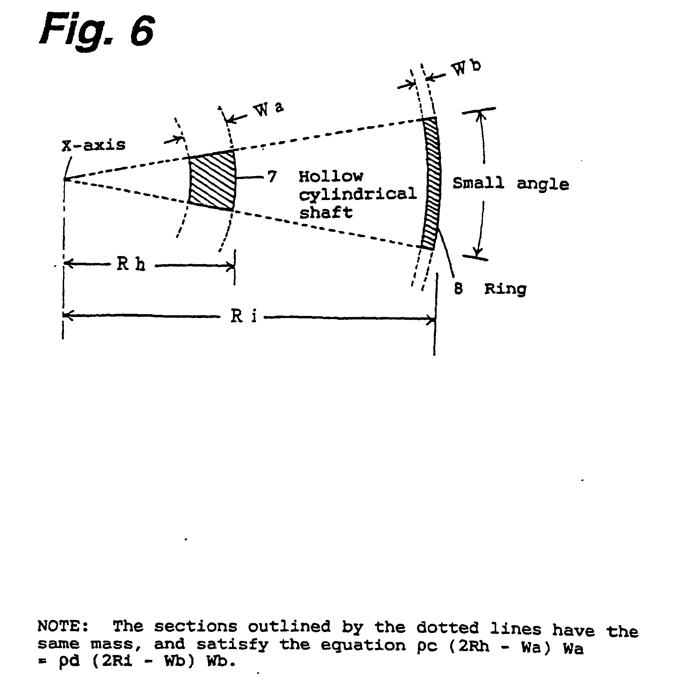

Fig. 6 is a drawing that shows a section having a small angle in the YZ plane of a hollow cylindrical shaft 7 and ring 8, whose center of rotation is the X-axis, where the mass of the portion of shaft 7 and ring 8 are equal.

The cylindrical shaft 7 has a thickness Wa, outer radius Rh, and density ρc, and the ring 8 has a thickness Wb, outer radius Ri, and density ρd. In this case, if the equation, ρc (2Rh - Wa) Wa = ρd (2Ri - Wb) Wb, for equal mass of the shaft and ring, is satisfied, it is possible to make the deviation of the principal axis of inertia κ = 0.

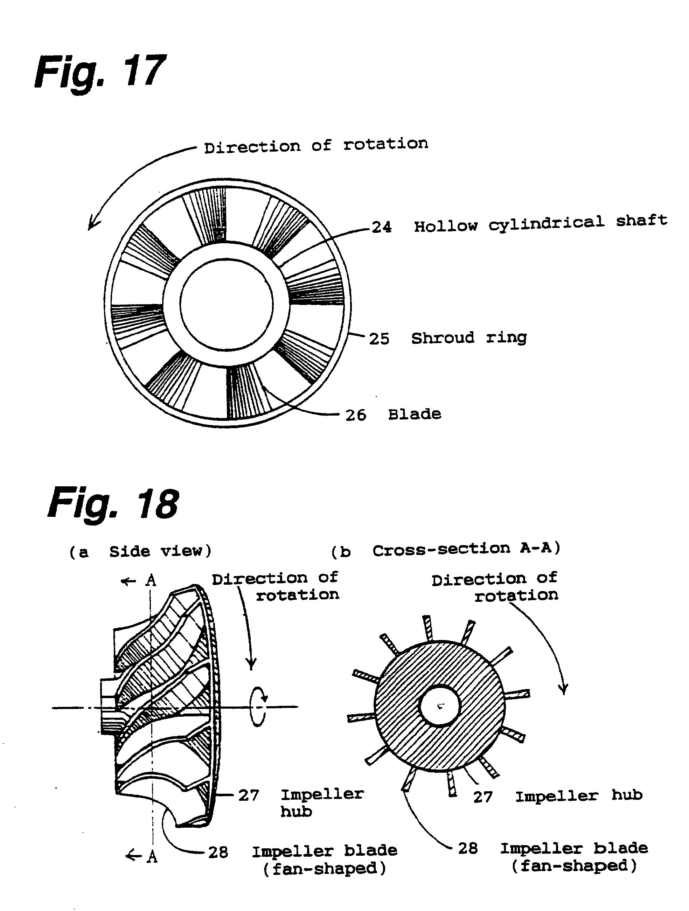

Also, the technique of this invention can be applied to a sealed turbine blade having a shroud ring 25 as in the embodiment shown in Fig. 17.

However, it is not possible to remove the deviation of the principal axis of inertia κ from all rotating bodies by only theoretical means. For example, tires and wheels of a vehicle on a road are related to each other by their purpose of function, and generally a testing stage is necessary.

Also, in the design and evaluation process, it is necessary to have a means of measuring the deviation of the principal axis of inertia.

There are two types of methods for measuring the deviation of the principal axis of inertia, depending on the type of rotating body. One method is for a rotor or gear of an electric motor or generator that rotates around a fixed axis of rotation (this will be called the rotating type), and the other method is for a rotating body, such as the connecting rod of a reciprocating engine, that has cyclic rocking motion (this will be called the cyclic type).

Differing from the system of particles described, in the case of a rotating body considered to be a continuous body made up of an infinite number of particles, the deviation of the principal axis of inertia η is described below as the total of an infinite number of deviations of principal axes of inertia κ in the rotating body, and can be thought of as acting on an axis of center of gravity that is parallel to the center axis of rotation of the rotating body.

In the method of measuring the deviation of the principal axis of inertia η, of a rotating-type rotating body, the change in the number of rotations Na occurring in time t due to losses, such as friction loss in a bearing, of an ideal type rotating body which resembles the rotating body and whose κ = 0, is measured.

Next, the rotating body to be measured is used in the same bearing, and the change in the number of rotations Nb for the same period of time t is measured. Na is then subtracted from Nb, and the result is divided by time t to find the number of rotations N per second.

However, due to the effects of air resistance, rotating bodies having vanes or blades, should be measured in a vacuum.

In this case, if the mass of the rotating body to measured is M, and the length from the center of the rotating shaft, to the partial axis of center of gravity of the fan-shaped sector is R, the number of rotations per second is N, the change in the angular velocity over the same time t is ω, and the circular constant is π, the amount of work due to the deviated force caused by η is equal to the change in kinetic energy and leads to the equation, M η²ω² (2πN) = (1/2) M R²ω².

Here, η can be found from the equation, η= R/(4πN)^{1/2}. However, if the length R is not a uniform value, an average value for R must be calculated.

The other method, used for measuring a cyclic-type rotating body, measures the period of the small natural oscillation. In this method, the center of the rocking motion is considered to be the suspended center of the measured cycle.

Also, as was done in the case of a rotating-type body, the method for measuring the deviation of the principal axis of inertia in a cyclic-type body, will be explained by considering that there are an infinite number of deviations of principal axes of inertia κ acting on an infinite number of different points in the body, such as in the case of a connecting rod.

If the mass of the connecting rod is M, the distance from the suspended center to the center of gravity of the rod (excluding the small end) is 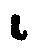 , the acceleration due to gravity is G, the circular constant is π, the angular acceleration of the small natural oscillation is ϕ (rad/sec²), and the small angle of the natural oscillation is θ (rad), then from the torque acting on the center of gravity of the rod and the concept of the center of oscillation leads to the equation M ( 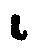 + η)²ϕ = - MG ( 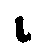 + η) θ.

In this case, the natural oscillation can be regarded dynamically as being simple harmonic motion.

Also, the square of the period, T², is expressed by the equation, T² = 4π²( 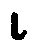 + η)/G,and the deviation of the principal axis of inertia η, as seen from the center of gravity of the rod can be measured as, η = [(T² G)/(4 π²)] - 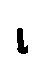 .

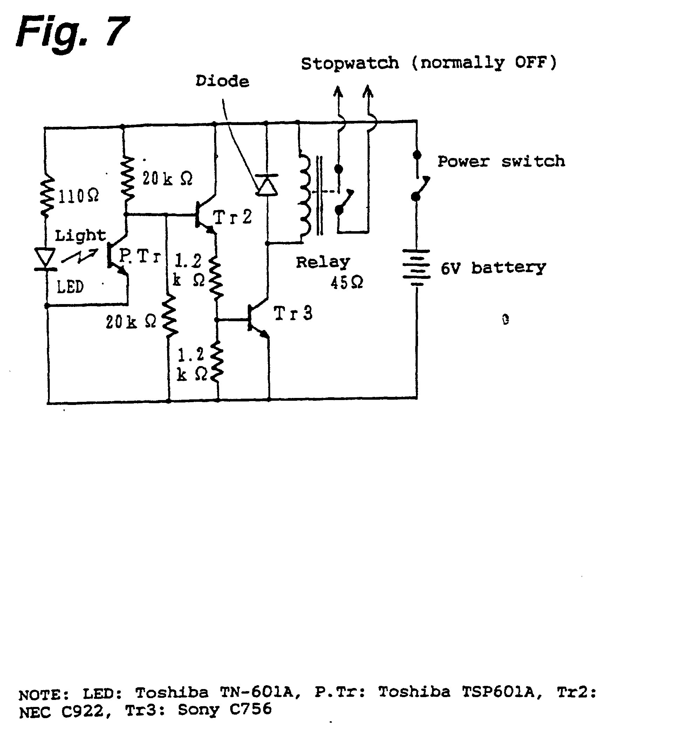

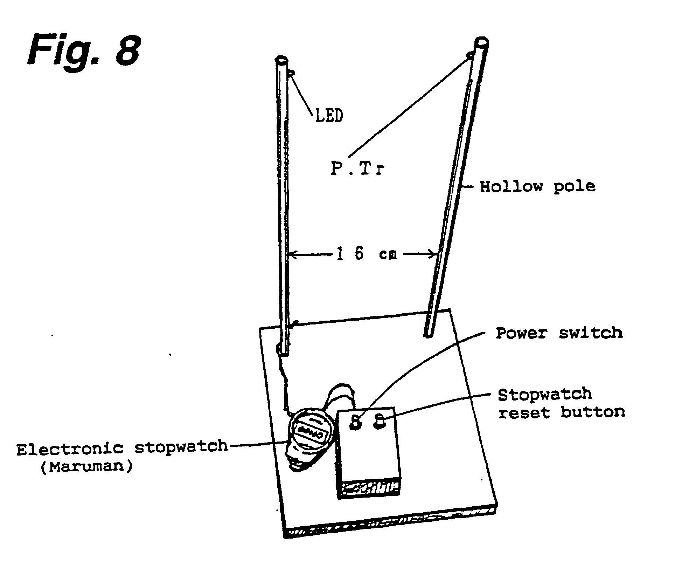

Measurement of the period according to this invention, was performed using an electronic period measuring device, as shown in Fig. 7 and Fig. 8, which comprises a light emitting diode (LED) as the light emitting element, and a phototransistor (P.Tr) as the light receiving element. The device is capable of measurement with a degree of error of +/-1/10,000 sec or less for a body with a period of 1 sec or more.

The theory behind the operation of this measurement device, is that when the power switch, shown in Fig. 8, is being pressed, light is emitted from the LED, and when the light is blocked by the body to be measured, the current in the phototransistor is cut OFF. This turns ON Tr2 and Tr3, and the current that flows activates a relay. The activated relay moves a switch, and the electronic stopwatch begins to measure time.

After about 10 oscillations, the power switch is pressed, and when the body being measure once again blocks the light, the relay is activated again and the stopwatch is stopped, and the time for 10 cycles has been measured.

Generally, application of a balancing technique to former multi-cylinder reciprocating engines was performed around the rotating axis of the crankshaft.

However, the inertia force caused by the deviation of the principal axis of inertia η of the crankshaft and connecting rod acts on the center of the rocking motion of the connecting rod, and this is considered to be the cause of mechanical vibrations and heat loss.

From theory and also from test results, the theory regarding the period of a physical pendulum (actual pendulum or compound pendulum) as described by former dynamics, can be shown to be in error.

The reason is that when a torque Tq is applied to a general body, it can be considered that the moment of inertia of the body is J, and the angular acceleration of the body is ϕ, leading to the equation Jϕ = -Tq.

A body for which the equation Jϕ = -Tq holds true, is a special shaped body, which is exclusive in the present invention, such as a rod whose diameter can be ignored, a shaft, a bearing, a cylinder, a hollow cylinder, or a sphere, and where the conditions of having a deviation of axis of center of gravity ε= 0, and deviation of principal axis of inertia κ = 0 are satisfied in an axis of center of gravity, and which is limited by the torque Tq applied perpendicular to the axis of center of gravity of the body.

The theoretical background for this has already been explained. Also, in the bodies of all cases, the pendulum theory was applied, and it is not possible to know the value of the moment of inertia of the body.

In tests, the measurement results of a connecting rod having a mass of 836.6 g, showed that the period was 0.821 seconds when the distance from the suspended center to the center of gravity of the rod was 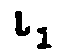 = 12.3 cm, and 1.446 sec for 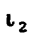 = 51.5 cm.

If the pendulum theory is correct, the square of the radii of rotation around the center of gravity should be the same. However, in this case, the square of the radius corresponding to 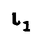 was 54.5 cm², and the square of the radius corresponding to 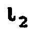 was 20.8 cm².

Also, the values of the moments of inertia of the rod were completely different, being 46.5 g cm² and 17.7 g cm² respectively. Here the acceleration due to gravity was taken to be G = 980 cm/sec².

In the special case where the equation, Jϕ = -Tq holds, η = 0 in the aforementioned equation, T² = 4π² ( 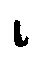 + η)/G, and this is the same as the equation for measuring the period of a harmonic pendulum.

In this case, when the radii of rotation around the center of gravity are zero for this specially shaped body, it can be considered as being the same as cyclic motion of a particle. In other words, the law of conservation of angular momentum is satisfied for the rotation, where the axis of rotation of the body is the axis of center of gravity with ε = 0 and κ = 0.

The above test measurements showed that the former physical pendulum theory is not correct, and that even for a rotating-type rotating body, it is possible to know the value of the deviation of the principal axis of inertia, η, from measuring the period.

Next, the preferred embodiments of the invention will be explained using the drawings as a reference.

The rotating body shown in Fig. 4 is an inner rotor, which has already been described.

However, in the case when the basic shape of the aforementioned inner rotor is applied to a flywheel, the material used for the cylindrical rotor 1 and the rotor shaft 2 has the same density, and in the area where the cylindrical rotor 1 and rotor shaft 2 fit together, it is necessary that it is formed so that no inertia force, including centrifugal force, occurs.

For example, this excludes the commonly used method of a former wedge type fitting.

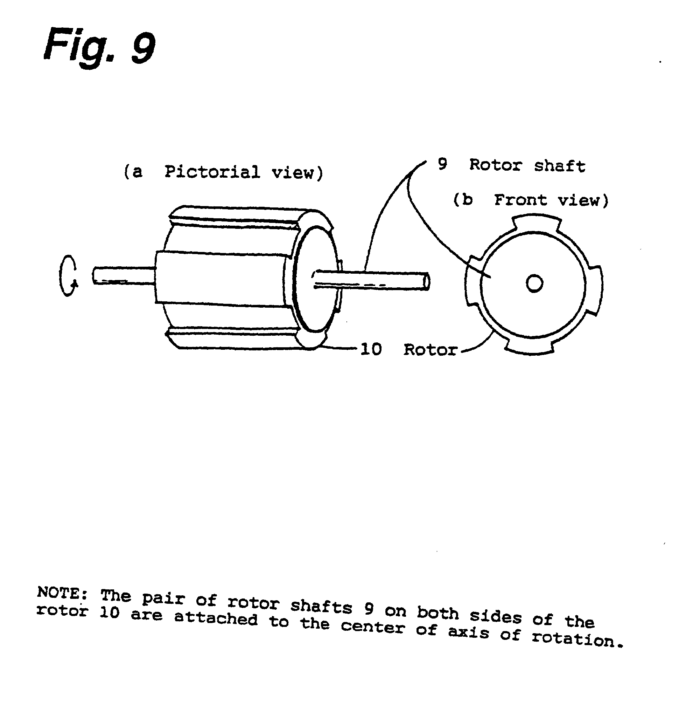

The embodiment shown in Fig. 9 is another form of an ideal type inner rotor of an electric motor or generator.

For the two rotor shafts 9, one end of the rod-shaped rotating shaft is disk shaped, and the shafts 9 are aligned with the rotor 10, which has partially fan-shaped protruding sections, so that the center of the axis of rotation of the rotor 10 and rotor shafts 6 are matched, and the two shafts 9 are attached to the end surfaces of the rotor 10 using an adhesive.

The shafts 9 are made of a metal that has excellent mechanical strength and has good friction properties, however, other materials such as ceramics can be used. If a hard magnetic material is used for the material of the rotor 10 to make magnetic bands, this rotor could be used as the rotor for a basic form synchronous motor, stepping motor, or generator.

If the material of the rotor is a soft magnetic material, the rotor could be used as the rotor of an induction motor.

There is no need for the density of the material of the shafts 9 and the rotor 10 to be related, and can be freely selected.

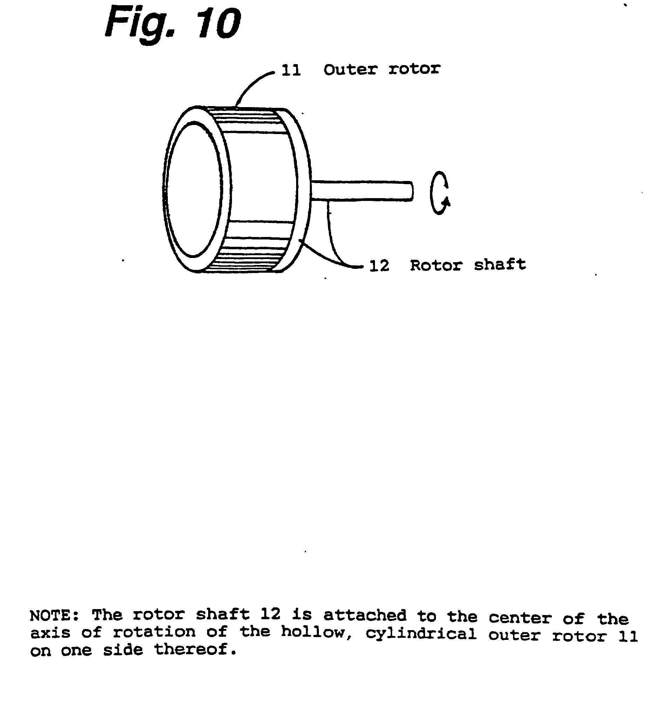

The embodiment shown in Fig. 10, is an ideal type outer rotor.

The hollow cylindrical magnetic rotor 11 and the metallic rotor shaft 12, which has one end that is disk shaped, are joined together using an adhesive at the center of rotation.

In regards to the material, construction of parts, or usage, this rotor is the same as the ideal type inner rotor described above.

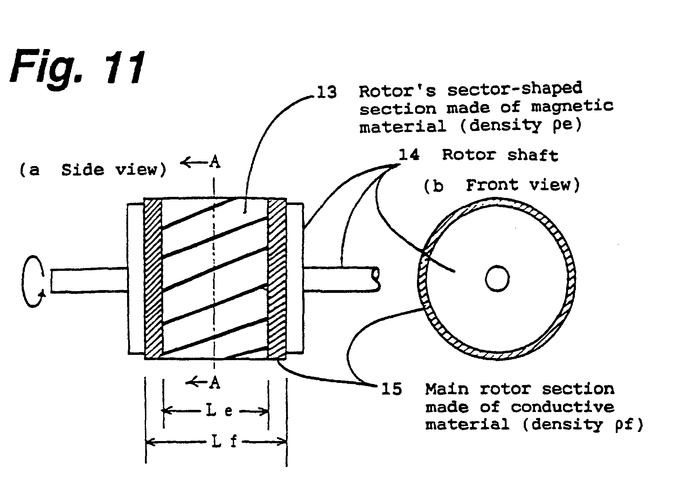

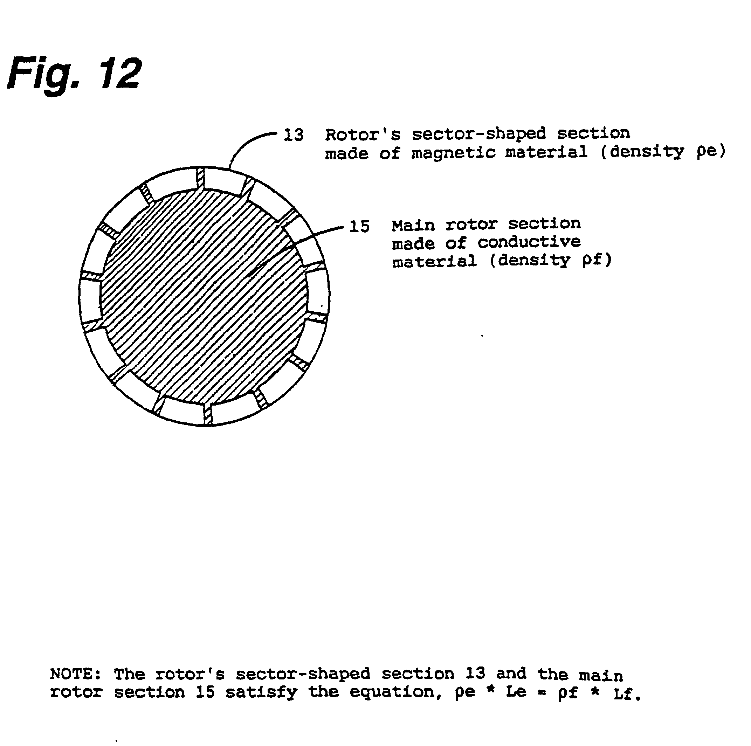

The embodiment shown in Figs. 11 and 12 is a real type cage rotor for an induction motor.

This rotor can also be used in a synchronous motor. The rotor portion comprises a conductive main rotor section 15 made of precision casting aluminum die cast (having density ρe), and fan-shaped rotor sections 13 made of soft magnetic material (having density ρf) which are attached to the main portion of the rotor 15 using an adhesive.

Two rotor shafts 14, having the same shape as those in the embodiments of the ideal type inner rotor and outer rotor described above, are joined to the main rotor section 15 at the center of the axis of rotation using an adhesive.

Fig. 12 is a cross-sectional view A-A of the cage rotor shown in Fig. 11.

The aforementioned rotor sections 13, as shown in the cross section, have a partial fan shape.

If the fan-shaped rotor sections 13 have a width Le, and the main rotor portion 15 has a width Lf, by making them such that the equation, ρe*Le = ρf*Lf, is satisfied, no deviated force, due to the deviation of the principal axis of inertia, will act on this rotor.

An embodiment of this invention relating to the rotor of a generator or electric motor has been described above.

Using a 4-pole ac motor, which is used in most household appliances, as an example, the efficiency was 40 to 50%, and the improvement of efficiency due to this invention was approximately 3%.

As an example, for a 307 g rotor of a single-phase ac motor, the results of measurement showed that the power lost for a deviation of the principal axis of inertia of 1.6 mm, and operating rpm of 1,500 rpm, was 0.317 watts.

The effective output of the electric motor is 8 watts, and with this invention, and improvement of power of 0.31 was possible, and the improvement in efficiency was (0.31 x 100)/8 = 3.8%.

In this kind of small, low rpm electric motor, power loss may not be all that significant.

However, in electric motors that have external loads that vary greatly, such as those used in industrial machinery, the power lost due to angular velocity caused by the deviation of the principal axis of inertia, is rather large, and it also becomes impossible to neglect the problem of heat generated corresponding to the power lost.

An example where the problem of heat generation becomes more serious than power loss, is in a permanent magnet stepping motor.

For the rotor of this kind of stepping motor, the angle of rotation is controlled by the number of input pulses input to the drive circuit, and the speed of rotation is controlled by the pulse frequency.

The response frequency for this input pulse is generally between 200 to 10,000 pps (pulse per sec), and so since the response velocity is high, the heat generated corresponding to the power loss caused by the deviation of the principal axis of inertia has a large effect in the reliability of the stepping motor.

According the repair data of Nippon Electric Co., Ltd, (NEC), the failure rate due to stepping motors, which are widely used in the printing mechanisms of commercially sold small computers or word processors, is about 44.7%, and most of the failures are due to damage caused by heat generation, this problem is the biggest problem that they would like to solve.

Also, in another case where the effect of this invention is very notable, is in an electric motor that is used as the prime mover of an electric automobile, where it is desired that the motor be made as light as possible, and where the motor operates at high speeds exceeding 3,000 rpm.

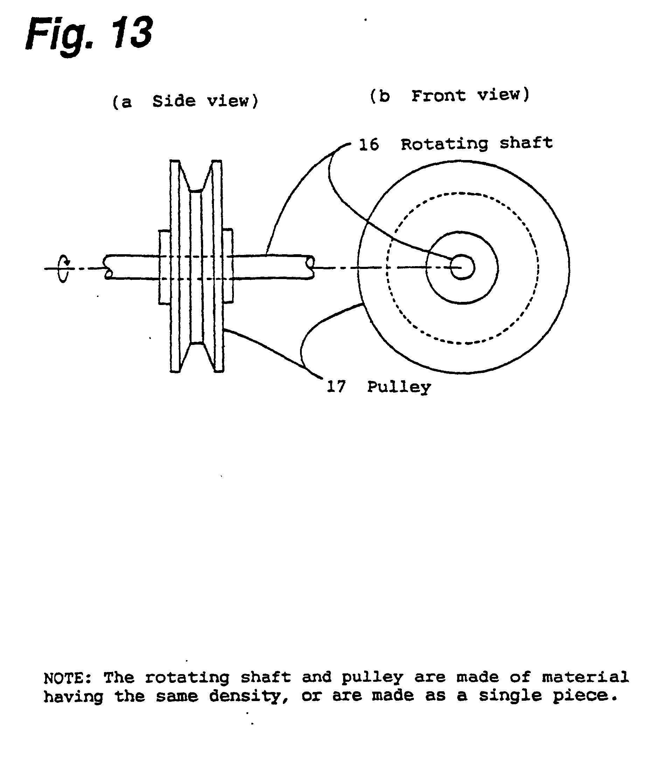

The embodiment shown in Fig. 13, is an ideal type pulley that is transmits power by way of a belt. The rotating shaft 16 and pulley 17 are made of material having the same density, and are both securely fastened together.

The outer diameter of the area where the shaft 16 fits in the pulley 17 is made larger, or the this area is specially designed so that it is strong enough to correspond with the load.

The pulley shown in Fig. 13 can be made as a single piece using precision casting or machine cutting.

The method used for attaching the pulley 17 to the rotating shaft 16 does not include methods that would cause inertia force, including centrifugal force to occur. This method of attachment was also previously explained in the embodiment of the flywheel.

The pulleys, gears, cam shafts, eccentric rotors, and crankshafts of this invention show the real effects of the invention basically in the same way as the generator or electric motor described above.

Particularly, in the reduction gear and pulley of a gas turbine of a high-speed rotating generator with operating speeds exceeding 40,000 rpm, or in the cam shaft and pulley of a reciprocating engine with operating speeds exceeding 3,000 rpm, the effects of this invention on the improvement of power loss of the machine is expected to be great.

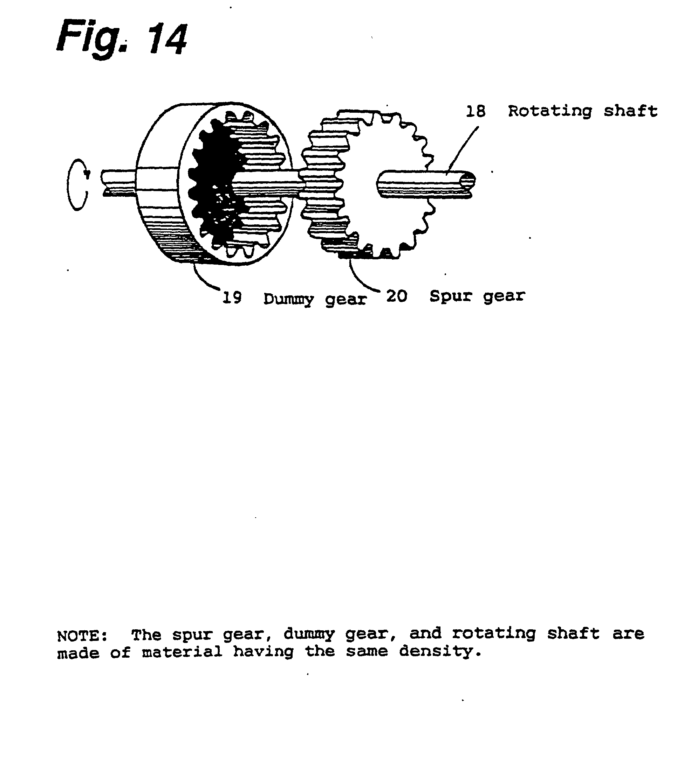

The embodiment shown in Fig. 14, is a pictorial view of a real type spur gear. A dummy gear 19 and spur gear 20 are attached to a rotating shaft 18. All three of these components are made of material having the same density. Its construction becomes real type by adding the dummy gear 19.

The spur gear and dummy gear are precision cast and hardened using heat treatment.

The theory behind using the dummy gear is that it also becomes possible to use it for the cam shaft and flywheel of reciprocating engine. However, the intention of this invention has been made clear by previous explanations, and a detailed explanation will be omitted.

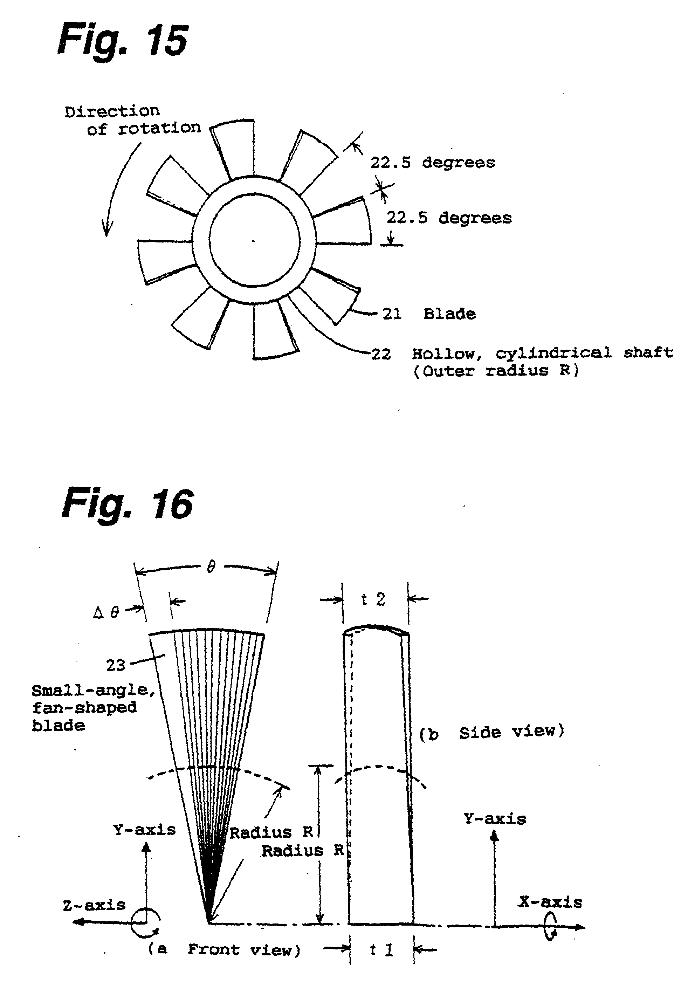

Fig. 15 shows the basic construction of one ideal type turbine that is to be used in combination with several.

The eight blades 21 are sectors with the axis at the center of rotation of the hollow cylindrical shaft 22, and are partial sectors having the center cut out. The blades 21 are formed with the hollow cylindrical shaft 22 as a single piece.

However, if the material of both the blades and the shaft has the same density, it is also possible to construct the turbine with blades that are slid onto the shaft from the side.

Multiple blades 21 are used, but the number can be odd or even.

This kind of ideal type turbine, is generally used at high speeds, having an operating speed of tens of thousands rpm, and not only does this invention lessen the inertia force caused by the deviation of the principal axis of inertia and reduce the power loss, but also contributes greatly to the reducing the required strength of the turbine blades.

Fig. 16 shows the shape of the blades 21.

The blade is constructed by placing several small angle, sector blades 23 with uniform thickness Δθ, on top of each other until the total angle, θ,is 22.5 degrees. The blade also has a radius R in the center that corresponds to the outer radius of the hollow cylindrical shaft 22.

In the case of blades 21, the thickness at the base of the blade 21 at the center of rotation on the X-axis, t1, and the thickness of the blade tip, t2, are the same.

However, the small angle, sector blades with uniform thickness Δθ, can be made so that the thickness of the blade increases as it gets nearer to the center of rotation on the X-axis, and so t1 > t2.

The embodiment shown in the front view of Fig. 17 is one an ideal type turbine, to be used with several, and an ideal type shroud ring. Around the outer circumference of the blades 26 is a kind of duct that is generally called a shroud ring 25, creating very efficient, enclosed, axial-flow-type turbine.

As is shown in Fig. 6, if the thickness of the hollow cylindrical shaft 24 is Wa, and its outer radius is Rh, and the thickness of the shroud ring 25 is Wb, and its outer radius is Ri, then the equation, (2Rh - Wa) Wa = (2Ri - Wb) Wb, can be satisfied.

In this case, the hollow cylindrical shaft 24, shroud ring 25, and the eight blades 26 are all made of material having the same density.

In a turbine with shroud ring according to the prior art, the shroud ring receives the action of the inertia force when the turbine rotates at high speed, and is deformed or damaged, therefore it was mainly used in low-speed devices such as an industrial blower.

This invention opens up the way for using this enclosed type of turbine in high-speed turbines, compressors, or fans, and makes it possible to greatly improve efficiency.

The two embodiments of the invention shown in Fig. 15 and Fig. 17 are basic forms, and can be applied in turbines, as well as aircraft propellors, ship screws, or as rotor blades or rotor vanes in axial-flow blowers and compressors.

The embodiment shown Fig. 18 is an ideal type centrifugal compressor impeller used in the turbo charger of an automobile. This compressor impeller is made by precision casting, and is called a backward type, where the blades curve in a direction opposite the direction of rotation.

The air characteristics of the impellor blades 28 have many strong points such as, more uniform air current when compared to radial-type straight blades, and high efficiency even when the amount of air flow is small.

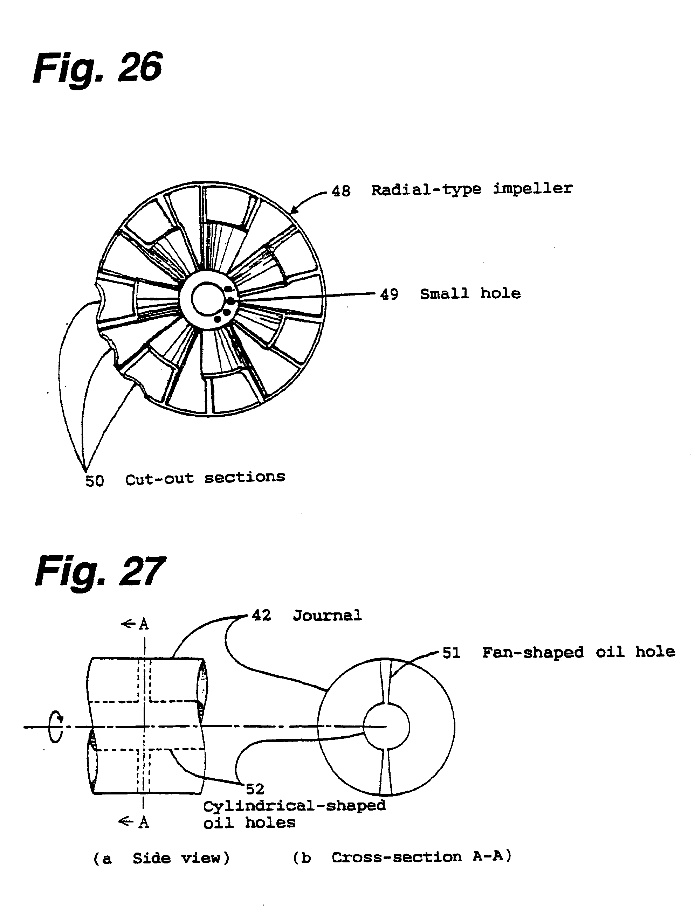

The construction of the backward type impellor blades is difficult, however, this invention may also be applied to radial type blades having simpler construction (see Fig. 26).

The cross-sectional view A-A (b) of Fig. 18 shows the shape of the impellor blades 28 and impellor hub 27.

The shape of the cross section of these impellor blades 28 is a partial sector.

The basic form of this ideal type centrifugal compressor impellor can also be used in gas turbines, which are widely used in thermo power plants, and by using a shroud ring as described above, it is possible to make an efficient enclosed type of impellor and greatly improve the heat efficiency.

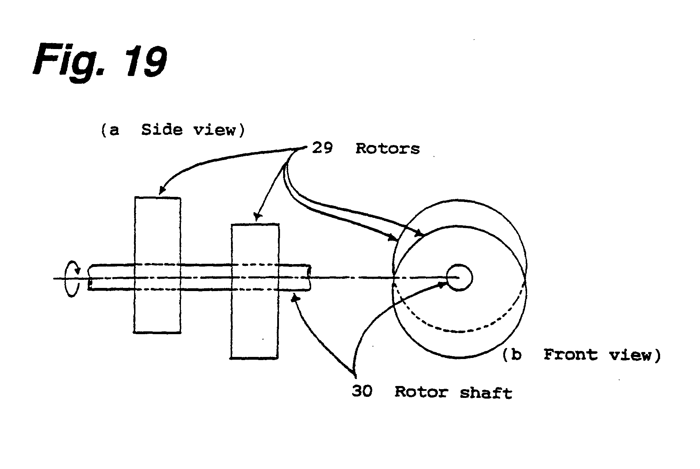

The embodiment shown in Fig. 19 is of a crankshaft of a reciprocating compressor which has multiple eccentric rotors.

The center of gravity of the two rotors 29 are located 180 degrees relative to each other on the axis of rotation. The two rotors 29 fit around and are secured to the rotor shaft 30. The material of the rotors 29 and rotor shaft 30 has the same density.

This crankshaft can be used in developmental applications in the basic mechanisms of Napier's Engine or Cary's Rotary Pump.

A configuration of two rotors 29 can also be selected where one rotor is used as a dummy rotor for balancing, as a means against the centrifugal force.

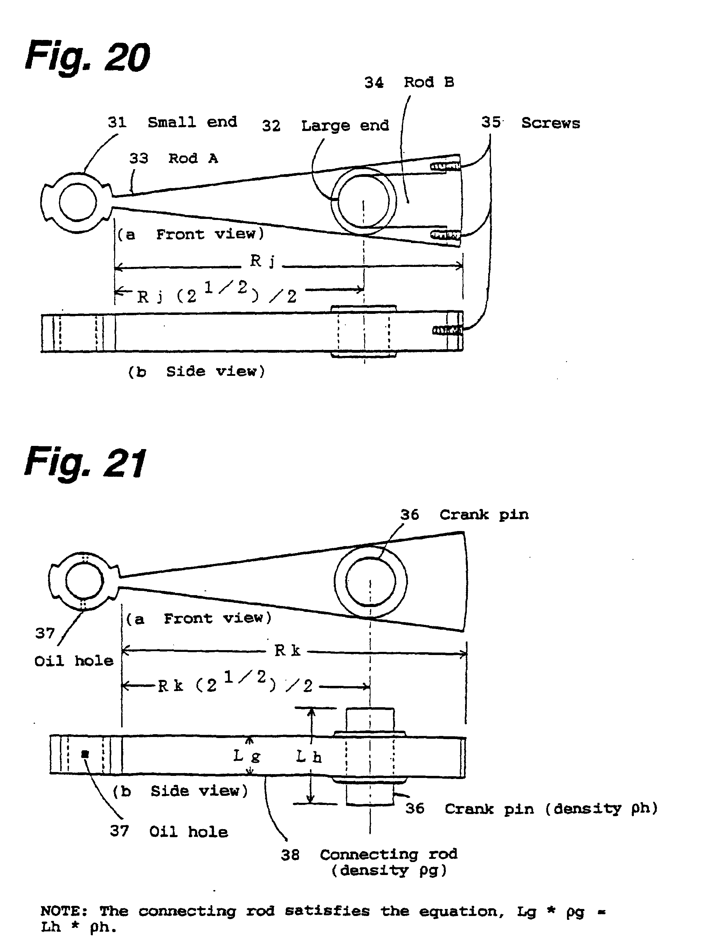

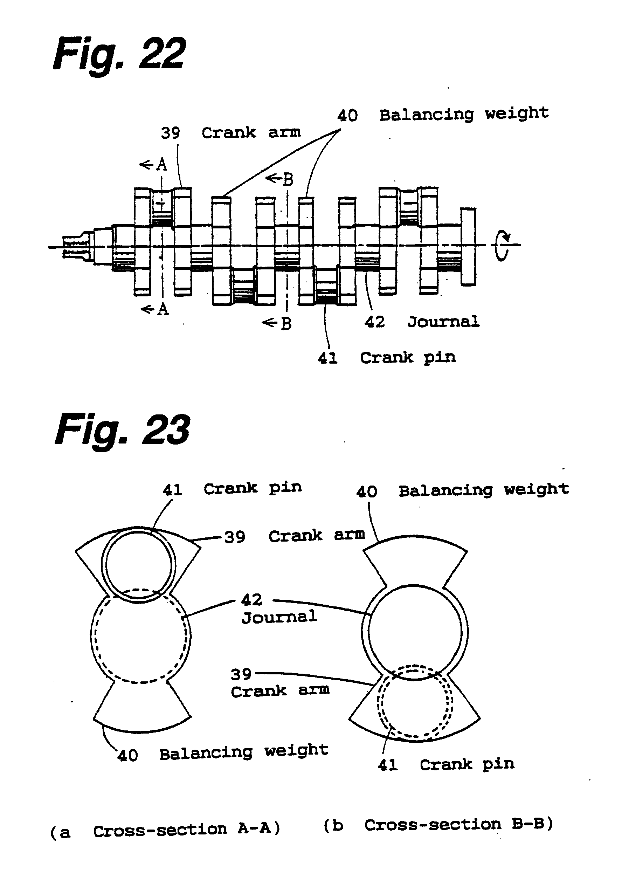

The embodiment shown in Fig. 20 is an ideal type connecting rod used in a multi-cylinder reciprocating engine, and it is used in combination with the crankshaft shown in Fig. 22 and Fig. 23.

In this embodiment, the small end is the end which connects to the piston by way of the piston pin, and it has independent ideal type construction.

This ideal type connecting rod comprises rod A 33, rod B 34, and two screws 35, where each of the parts is made of material having the same density.

As shown in the figure, if the small end is removed, the center of the large end 32, which connects to the crank pin 41, is located at a position Rj (2^{1/2})/2, where Rj is the length of the fan-shaped sector which includes rod A 33 and rod B 34.

For this kind of ideal type connecting rod it is not possible to completely make the deviation of the principal axis of inertia η = 0. The reason for this was previously explained, however, another reason is that due to the existence of the large end 32, it is not possible for the partial axes of center of gravity and partial principal axes of inertia to match when the rod is divided into small sections.

Also, any connecting rod must be made so that it does not touch the inner wall of the Cylinder during operation of the engine.

Different forms of this embodiment that are not are shown in Fig. 21 are possible, however, in order to reduce the deviation of the principal axis of inertia in the plane that is perpendicular to the center axis of the rocking motion, the basic form is a combination of circular and fan shapes.

The deviation of the principal axis of inertia η of connecting rods according to the prior art, was about 30 to 40mm, for example in the case of a 800 to 900 g connecting rod of a 4-cylinder gasoline engine. However, for the 830 g ideal connecting rod of this invention, shown in Fig. 20, this was improved to be only 3 mm.

The centrifugal force of the multiple connecting rods in a multi-cylinder reciprocating engine, as seen from the axis of rotation of the crankshaft, does not act on each individual connecting rod, because as previously explained, they are relatively placed so that they are balanced.

For this case, there is considered to be a couple moment caused by the dynamic unbalance.

The other inertia force caused by the deviation of the principal axis of inertia is considered in the vibration in the rocking of each individual connecting rod, and if the angular velocity of the crankshaft is ω , then the average angular velocity of the connecting rod can be expressed as being (ω/(2^{1/2}).

Also, the power lost due to the rocking motion of this ideal type connecting rod, can be expressed by the equation, La = (M/G) η² [ω /(2^{1/2})]³ / 735.5.

In more detail, if η = 0.003, and the angular velocity ω = 200 π (rad/sec) when the engine is operating at 6,000 rpm, where π is the circular constant, the acceleration due to gravity G = 9.8 m/sec², and 1PS = 735.5 watts, then La is 0.09 PS.

The total power lost for four ideal type connecting rods is four times La calculated above, and is only 0.36 PS.

For the same conditions, if η = 35 mm, then the power lost would be 49.5 PS, and effects of this invention are extremely noticeable.

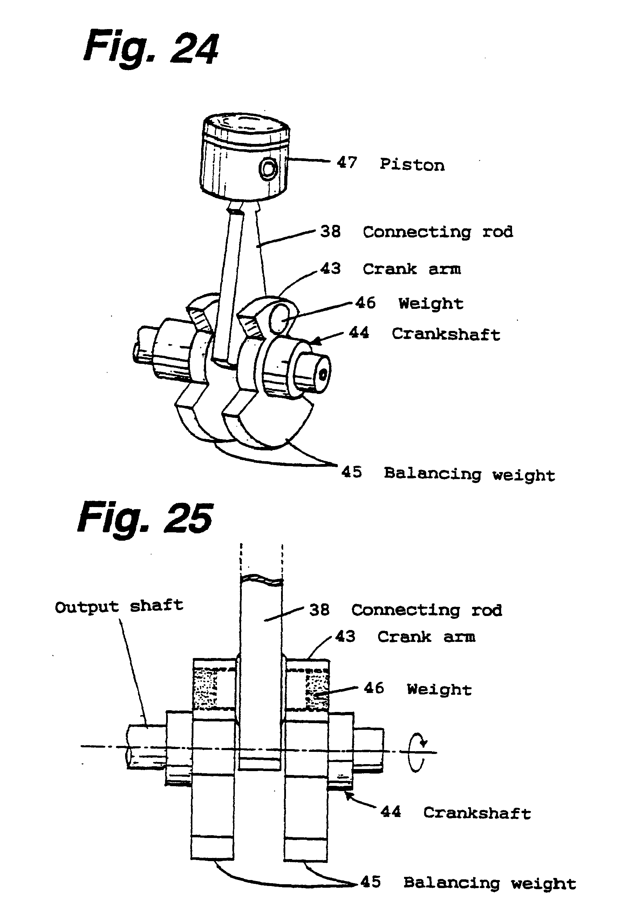

The embodiment shown in Fig. 21 is a real type connecting rod for a single-cylinder reciprocating engine that corresponds to the crankshaft 44 shown in Fig. 24 and Fig. 25.

For this real type connecting rod, if the length of the fan-shaped part of the connecting rod 38 is Rk, then the position of the center of the crank pin 36, where the connecting rod connects to the crankshaft 44, is Rk (2½)/2.

If the connecting rod is constructed so that the density of the connecting rod 38 is pg and its thickness is Lg, and the density of the crank pin 36 is ρh and its length is Lh, so that the equation, Lg * ρg = Lh * ρh, is satisfied, then it is possible to essentially make the deviation of the principal axis of inertia zero.

In the case of this real type connecting rod, if a small increase in the deviation of the principal axis of inertia is considered due to the protruding section of the connecting rod 38, then the position where the rod fits with the crank pin 36 is not necessarily at Rk (2^{1/2})/2.

The effect of the real type connecting rod of this invention, is nearly the same as that for the ideal type connecting rod described above.

Also, as shown in Fig. 21, it is best if several fan-shaped oil holes 37 are located on the ideal and real type connecting rods.

However, this is not an essential requirement of this invention.

The embodiment shown in Fig. 22 and Fig. 23 is a 5-bearing crankshaft made of material having the same density.

This crankshaft differs from the prior art in that the section of the crank arm 39 and balancing weight 40 are fan-shaped.

Various forms can be considered for the size of the balancing weight in this case, and in some cases it is not necessary. It is not an essential part of this invention.

Generally, in the case of a prior reciprocating engine, the efficiency of the engine was about 25%.

However, by adopting the ideal connecting rods, 5-bearing crankshaft, cam shafts and pulleys of this invention, it is possible to greatly reduce the mechanical power losses, and provide a reciprocating engine that is close to the theoretical values for the Otto cycle thermal efficiency.

The embodiment shown in Fig. 24 and Fig. 25 is a crankshaft for a single-cylinder reciprocating engine.

As described above, this kind of crankshaft 44 can be used together with the real type connecting rod shown in Fig. 21.

The crankshaft 44 is made as a pair which connect to the real type connecting rod by crank pin 36.

Weights 46 compensate for the mass of hole in the crank arm 43 that connects to the crank pin 36. The weights 46 are made of lead alloys and attached by press fitting.

The mass of the weights 46 correspond to the mass of the hole made in the crankshaft 44.

The power loss caused by the deviation of the principal axis of inertia in a single-cylinder reciprocating engine which uses the real type connecting rod and crankshaft of this invention can be assumed to be zero.

However, as was the case with the prior art, it is not possible to eliminate the action of the centrifugal force caused by the deviation of the axis of center of gravity due to the relation of the real type connecting rod and crankshaft.

Fig. 26 is of a radial impeller of a super charger for a gasoline engine. It shows the former method of adjusting the balance.

Here, a balancing machine is used to detect uneven mass distribution, and small holes 49 or cut out sections 50 are used to adjust the balance.

However, the adjustment method intended by this invention for reducing the power loss, does not use of these small holes 49, and as shown in the ideal type compressor impeller of Fig. 18, it is better if the thickness in the radial direction of the impeller hub 29 is cut out.

Fig. 27 is an enlarged view of the journal section 42 of the crankshaft shown in Fig. 22.

Power loss caused by the deviation of the principal axis of inertia is reduced by forming cylindrical oil holes in the center of the journal 42, and supplying lubrication oil to the surface of the journal 42 by way of the fan-shaped oil holes 51.

The above explanation of the method of balancing a rotating body and the shape of the oils holes is intended also to show cases where it is not possible to make the deviation of the principal axis of inertia for the rotating body intended by this invention completely zero.

However, this explanation is not an essential part of this invention.

The invention has been described above based on specific embodiments.

This invention is not limited to the specific forms shown here, but rather includes all forms that are not separated from the intention and scope of this invention.

The intended scope of this invention is not limited by the above embodiments.

This invention was constructed according to new theoretical background as described above relating to a rotating body, and a summary of the effects of the invention will be given below.

The first effect of the invention is, that in addition to playing a large role in directly improving the mechanical power loss in the rotating body of this invention or in a machine that uses at least one such rotating body, it also makes machines possible that operate at higher rotation speeds and that are lighter weight, and indirectly contributes to conservation of resources.

Also, in addition to the aforementioned improvements, it plays a role in reducing unnecessary heat generation that corresponds to the power lost, and contribute in making it possible to reduce the strength required to handle the inertia force caused by the deviation of the principal axis of inertia.

The second effect of this invention is that the basic technique of this invention plays a role in providing new theory for the design and manufacturing processes of rotating bodies or the machines that use rotating bodies, and can be helpful in reducing the expenses related to these processes.

Next, a concrete example will be given to explain the effects of the invention.

For example, in an electric power system from generating power with the use fossil fuels to power consumption, this invention could have a great effect on the generation equipment of this system which includes gas turbines and their reduction gears, generators, synchronous phase modifiers, electric motors of air conditioning equipment, compressors, fans, etc.

In considering the rotating bodies or machines that use rotating bodies in this electric power system, even if the average value that the efficiency is improved for each rotating body is only about 10%, the amount of fossil fuels required for generating electricity could be cut to half or less.

It is also expected that this invention would greatly contribute to reducing the amount of environmental pollution due to the carbonic gasses, nitrides, and sulfides discharged from the overall electric power system.

Furthermore, the rate of fuel consumption during normal operation of an automobile is usually twice that of when the automobile is travelling at constant speed and on a constant surface.

Therefore in an automobile having a reciprocating engine according to this invention, the power lost during acceleration of deceleration caused by the deviation of the principal axis of inertia is improved, and this invention is expected to have a great effect on improving the overall output power by 200%.

For an ordinary compact car in conditions of no wind, if the rolling resistance at a constant speed of 100 km per hour is 15 kg, and the air resistance is 15 kg, the total amount of force necessary would be 30 kg, and the amount of power required would be 30 x 100 x 1,000/(3,600 x 75) = 11.1 Ps.

The recent increase in output power of small compact cars is spent in the acceleration performance or so called surplus engine horsepower.

As has already been explained, in order to accelerate to twice the speed in 1 second, 8 times the amount of power would be required. However, in an engine using the prior art, half of the power required for acceleration of the car is spent as unnecessary internal power for engine rotation.

In the reciprocating engine of this invention, the inertia forces that acts internally on the rotating body is greatly reduced, and so operation at higher rpm is possible without sacrificing the acceleration performance.

Also, by reducing the amount of engine exhaust that corresponds to the improvement of output performance and acceleration performance, the overall rate of fuel consumption is increased, and can be expected to be two times or more that of an engine using the prior art.

Moreover, it is possible to simplify the cooling equipment of the engine, greatly contributing to reducing to cost of the engine.

Furthermore, the application of this invention does not have the problems that frequently accompany the application of new technology.

Therefore, this invention can be applied rather easily, and will greatly contribute in helping solve problems of energy and environmental pollution that people will have to face in the near future.

## Claims

1. A rotating body which performs rotation or rocking motion and which is statically or dynamically balanced for reducing mechanical vibrations, **characterized in that** said rotating body comprises:
a center axis of rotation or rocking motion which is an imaginary line of X-axis or a shaft about which said rotating body turns or rocks round itself; and
a rotating section around said center axis;
said rotating section having a sectional center of gravity;
said rotating section further having a sectional principal axis of inertia being parallel to said center axis; and
said rotating section having a mass distribution in which the deviation defined as the difference between said sectional center of gravity and said sectional principal axis of inertia is substantially reduced or essentially eliminated.

2. The rotating body of claim 1, wherein:
said rotating body having a center axis of rotation or rocking motion which is an imaginary line about which said rotating body turns or rocks round itself; X-axis of Figs. 4, 5, 6,16;
said rotating body comprising a fan-shaped radial sector (4, 7, 8) defined at any and all predefined angles along said center axis of rotation or rocking motion within said rotating body, said fan-shaped radial sector having a small angle and small thickness such that a radius of said fan-shaped radial sector is perpendicular to said center axis of rotation or rocking motion;
said fan-shaped radial sector within said rotating body further extending from said center axis of rotation or rocking motion to an external, outermost radial surface of said rotating body along said small angle and small thickness;
said fan-shaped radial sector (4, 7, 8) having a partial axis of center of gravity (Gr 5) being parallel to said center axis of rotation or rocking motion;
said fan-shaped radial sector further having a partial principal axis of inertia (Fr 6) being parallel to said center axis of rotation or rocking motion; and
said fan-shaped radial sector within said rotating body having a mass distribution in which said partial center of gravity (Gr 5) and said partial principal axis of inertia (Fr 6) are substantially matched.

3. The rotating body of claim 1 or 2 wherein said rotating body is used in energy conversion between electrical energy and mechanical energy.

4. The rotating body of claim 1 or 2 wherein said rotating body comprises multiple vanes or blades, and wherein said rotating body is used in the movement, compression, conversion of force, or conversion of power of a fluid such as air, steam, gas combustible matter, water, or oil.

5. The rotating body of claim 1 or 2, wherein said rotating body is used in a mechanism that converts between linear motion and rotating motion.

6. The rotating body of claim 1 or 2, wherein said rotating body is used in a rotating mechanism of a prime mover or compressor.

7. The rotating body of claim 1 or 2, wherein said rotating body comprises a rotating shaft, said center axis of rotation of said rotating body comprises a central axis of said rotating shaft, and wherein said rotating shaft has a power transmission function. or 2.

8. The rotating body of claim 1 or 2, wherein the rotating motion of said rotating body is supported by multiple bearings.

9. The rotating body of claim 1 or 2, in combination with a machine which performs rotational or rocking motion.

10. The combination of claim 9 wherein said machine comprises an electric motor or generator; and
said at least one rotating body comprises a rotor of said electric motor or generator.

11. The combination of claim 9 wherein the rotating motion of said rotating body functions as a smooth flywheel.

12. The combination of claim 9 further comprising a belt for interconnecting said machine with said at least one rotating body, wherein said at least one rotating body comprises a pulley connected to said belt.

13. The machine of claim 9, wherein said rotating body comprises multiple vanes or blades far use in a turbine propeller, or screw.

14. The combination of claim 9 wherein said rotating body comprises a connecting rod and said machine comprises a prime mover or machine tool.

15. The rotating body of claim 1, wherein:
said rotating body having a center axis (2, 14, 18, 36) of rotation or rocking motion, said rotating body comprising a fan-shaped radial sector defined at any and all predefined angles along said center axis of rotation or rocking motion within said rotating body, said sector having a small angle and a thickness equalizing a total thickness of said rotating body along said center axis of rotation or rocking motion;
said fan-shaped radial sector within said rotating body further extending from said center axis of rotation or rocking motion to an external, outermost radial surface of said rotating body along said small angle and small thickness;
said fan-shaped radial sector having a partial axis of center of gravity (Gr 5) being parallel to said center axis of rotation or rocking motion;
said fan-shaped radial sector further having a partial principal axis of inertia (Fr 6) being parallel to said center axis of rotation or rocking motion; and
said fan-shaped radial sector within said rotating body having a mass distribution in which said two partial axes (Gr 5 and Fr 6) are substantially matched.

16. The rotating body of claim 15 wherein said rotating body is used in energy conversion between electrical energy and mechanical energy.

17. The rotating body of claim 15 wherein said rotating body comprises multiple vanes or blades, and wherein said rotating body is used in the movement, compression, conversion of force, or conversion of power of a fluid such as air, steam, gas combustible matter, water, or oil.

18. The rotating body of claim 15, wherein said rotating body is used in a mechanism that converts between linear motion and rotating motion.

19. The rotating body of claim 15, wherein said rotating body is used in a rotating mechanism of a prime mover or compressor.

20. The rotating body of claim 15, wherein said rotating body comprises a rotating shaft, said center axis of rotation. of said rotating body comprises a central axis of said. rotating shaft, and wherein said rotating shaft has a power transmission function.

21. The rotating body of claim 15, wherein the rotating motion of said rotating body is supported by multiple bearings.

22. The rotating body of claim 15, in combination with a machine which performs rotational or rocking motion.

23. The combination of claim 22 wherein said machine comprises an electric motor or generator; and
said at least one rotating body comprises a rotor of said electric motor or generator. 22

24. The combination of claim wherein said rotating body further comprises a gear for transmission of force or power.

25. The machine of claim 22, wherein said rotating body comprises. multiple vanes or blades for use in a turbine, propeller, or screw.

26. The combination of claim 22 wherein said rotating body comprises a connecting rod and said machine comprises a prime mover or machine tool.

27. The rotating body of claim 1, wherein:
said rotating body comprising an axis (30) of rotation, wherein part of said body has an eccentric axis parallel to said center axis of rotation, said body further comprising a fan-shaped radial sector, defined at any and all predefined angles, said sector having a small angle and a small thickness with a radius perpendicular to said eccentric axis;
said fan-shaped radial sector further extending from a peak point intersecting said eccentric axis, to an external, outermost radial surface of said rotating body along said small angle and small thickness, wherein said eccentric axis rotates about said center axis of rotation;
said fan-shaped radial sector having a partial axis of center of gravity (Gr 5) being parallel to said eccentric axis;
said fan-shaped radial sector further comprising a partial principal axis of inertia (Fr 6) being parallel to said eccentric axis; and
said fan-shaped radial sector within said rotating body comprising a mass distribution in which said two partial axes (Gr 5 and Fr 6) are substantially matched.

28. The rotating body of claim 27, wherein said rotating body is used in a rotating mechanism of a prime mover or compressor.

29. The rotating body of claim 27, wherein said rotating body comprises a rotating shaft, said center axis of rotation of said rotating body comprises a central axis of said rotating shaft, and wherein said rotating shaft has a power transmission function.

30. The rotating body of claim 27, wherein the rotating motion of said rotating body is supported by multiple bearings.

31. The rotating body of claim 27, in combination with a machine, which performs rotational or rocking motion.

32. The combination of claim 31 wherein said rotating body comprises a cam or camshaft for opening or closing an engine valve. 31

33. The combination of claim 31, wherein said machine comprises a rotary-piston compressor, rotary-piston pump, or rotary piston prime mover.

34. The rotating body of claim 1, wherein:
said rotating body comprising an axis (42) of rotation, a fan-shaped rotating portion extending along said center axis of rotation, and a fan-shaped radial sector, defined at any and all predefined angles along said center axis of rotation within said body, said sector having a small angle, a small thickness, and a radius perpendicular to said center axis of rotation, said radial sector further extending from said center axis of rotation to an external, outermost radial surface of said rotating body along said small angle and small thickness;
said fan-shaped radial sector having a partial axis of center of gravity (Gr 5) being parallel to said center axis of rotation;
said fan-shaped radial sector further comprising a partial principal axis of inertia (Fr 6) being parallel to said center axis of rotation; and
said fan-shaped radial sector within said rotating body comprising a mass distribution in which said two partial axes (Gr 5 and Fr 6) are substantially matched.

35. The rotating body of claim 34, wherein said rotating body is used in a mechanism that converts between linear motion and rotating motion.

36. The rotating body of claim 34, wherein said rotating body is used in a rotating mechanism of a prime mover or compressor.

37. The rotating body of claim 34, wherein said rotating body comprises a rotating shaft, said center, axis of rotation of said rotating body comprises a central axis of said rotating shaft, and wherein said rotating shaft has a power transmission function.

38. The rotating body of claim 34, wherein the rotating motion of said rotating body is supported by multiple bearings.

39. The rotating body of claim 34, in combination with a machine which performs rotational or rocking motion.

40. The combination of claim 39 wherein said rotating body comprises a crankshaft and said machine comprises a prime mover or machine tool.

41. The rotating body of claim 1, wherein:
said rotating body comprising an axis (44) of rotation, a fan-shaped rotating portion that runs along said center axis of rotation, and a fan-shaped radial sector defined at any and all predefined angles within said fan-shaped rotating portion and intersecting said center axis of rotation, said radial sector further extending from said center axis of rotation to an external, outermost radial surface of said fan-shaped rotating portion;
said fan-shaped radial sector comprising a thickness equal to a total thickness of said fan-shaped rotating portion;
said fan-shaped radial sector extending perpendicular to said center axis of rotation;
said fan-shaped radial sector comprising a partial axis of center of gravity (Gr 5) being parallel to said center axis of rotation;
said fan-shaped radial sector further comprising a partial principal axis of inertia (Fr 6) being parallel to said center axis of rotation; and
said fan-shaped radial sector within said rotating body comprising a mass distribution in which said two partial axes (Gr 5 and Fr 6) are substantially matched.

42. The rotating body of claim 41, wherein said rotating body is used in a mechanism that converts between linear motion and rotating motion.

43. The rotating body of claim 41, wherein said rotating body is used in a rotating mechanism of a prime mover or compressor.

44. The rotating body of claim 41, wherein said rotating body comprises a rotating shaft, said center axis of rotation of said rotating body comprises a central axis of said rotating shaft, and wherein said rotating shaft has a power transmission function.

45. The rotating body of claim 41, wherein the rotating motion of said rotating body is supported by multiple bearings.

46. The rotating body of claim 41, in combination with a machine which performs rotational or rocking motion.

47. The combination of claim 46 wherein said rotating body comprises a crankshaft and said machine comprises a prime mover or machine tool.

48. The combination of claim 47, wherein said crankshaft comprises at least one journal section for rotatably supporting said crankshaft;
said at least one journal section comprising at least one cylindrical hole therethrough for reducing power loss.

49. The combination of claim 48, wherein said at least one journal section further comprises at least one fan-shaped oil hole connecting said at least one cylindrical hole with an external surface of said at least one journal section.

50. The combination of claim 47, wherein said crankshaft comprises at least one journal section for rotatably supporting said crankshaft; said at least one journal section comprising at least one cylindrical hole therethrough for reducing power loss.

51. The combination of claim 50, wherein said at least one journal section-further comprises at least one fan-shaped oil hole connecting said at least one cylindrical hole with an external surface of said at least one journal section.

## Patentansprüche

1. Rotierender Körper, der sich dreht oder oszillierend bewegt, und der statisch oder dynamisch ausgewuchtet ist, um mechanische Schwingungen zu verringern, **dadurch gekennzeichnet, dass** der rotierende Körper umfasst:
eine Mittenachse der Drehung oder oszillierenden Bewegung (die gedachte Linie der X-Achse bzw. der Welle, um die sich der rotierende Körper um sich selbst dreht oder oszilliert) und
ein um die Mittenachse rotierendes Teilstück;
dass das rotierende Teilstück einen Teilstück-Schwerpunkt hat;
dass das rotierende Teilstück zudem eine Teilstück-Hauptträgheitsachse hat, die parallel zur Mittenachse ist; und
dass das rotierende Teilstück eine Massenverteilung aufweist, bei dem die Abweichung, die definiert ist als die Differenz zwischen dem Teilstück-Schwerpunkt und der Teilstück-Hauptträgheitsachse, wesentlich verringert oder prinzipiell beseitigt ist.

2. Rotierender Körper nach Anspruch 1, wobei
der rotierende Körper eine Mittenachse der Drehung oder oszillierenden Bewegung aufweist (eine gedachte Linie, um die sich der rotierende Körper um sich selbst dreht oder oszilliert; die X-Achse in Fig. 4, 5, 6, 16) ;
der rotierende Körper einen fächerförmigen radialen Sektor (4, 7, 8) enthält, der bei allen beliebigen und allen vordefinierten Winkeln entlang der Mittenachse der Drehung oder oszillierenden Bewegung innerhalb des rotierenden Körpers bestimmt ist, wobei der fächerförmige radiale Sektor einen kleinen Winkel und eine geringe Dicke hat, so dass ein Radius des fächerförmigen radialen Sektors senkrecht zur Mittenachse der Drehung oder oszillierenden Bewegung steht;
der fächerförmige radiale Sektor innerhalb des rotierenden Körpërs sich zudem erstreckt von der Mittenachse der Drehung oder oszillierenden Bewegung zu einer externen äußersten radialen Fläche des rotierenden Körpers entlang des kleinen Winkels und der geringen Dicke;
der fächerförmige radiale Sektor (4, 7, 8) eine Schwerpunkts-Teilachse (Gr 5) aufweist, die parallel zur Mittenachse der Drehung oder oszillierenden Bewegung ist;
der fächerförmige radiale Sektor zudem eine Teil-Hauptträgheitsachse (Fr 6) aufweist, die parallel zur Mittenachse der Drehung oder oszillierenden Bewegung ist; und
der fächerförmige radiale Sektor innerhalb des rotierenden Körpers eine Massenverteilung hat, in der der Teil-Schwerpunkt (Gr 5) und die Teil-Hauptträgheitsachse (Fr 6) im Wesentlichen zusammenfallen.

3. Rotierender Körper nach Anspruch 1 oder 2, wobei der rotierende Körper für die Energieumwandlung zwischen elektrischer Energie und mechanischer Energie verwendet wird.

4. Rotierender Körper nach Anspruch 1 oder 2, wobei der rotierende Körper zahlreiche Schaufeln oder Blätter hat und der rotierende Körper zur Bewegung, zur Verdichtung, zur Umwandlung von Kraft oder zur Umwandlung von Energie eines Fluids verwendet wird, z. B. Luft, Gas, gasförmiger Brennstoff, Wasser oder Ö1.

5. Rotierender Körper nach Anspruch 1 oder 2, wobei der rotierende Körper in einem Mechanismus verwendet wird, der geradlinige Bewegungen in Drehbewegungen umsetzt oder umgekehrt.

6. Rotierender Körper nach Anspruch 1 oder 2, wobei der rotierende Körper in einem rotierenden Mechanismus einer Antriebsmaschine oder eines Kompressors verwendet wird.

7. Rotierender Körper nach Anspruch 1 oder 2, wobei der rotierende Körper eine rotierende Welle enthält und die Mittenachse der Drehung des rotierenden Körpers eine Mittenachse der rotierenden Welle umfasst und die rotierende Welle eine Energieübertragungsfunktion hat.

8. Rotierender Körper nach Anspruch 1 oder 2, wobei die Drehbewegung des rotierenden Körpers von zahlreichen Lagern unterstützt wird.

9. Rotierender Körper nach Anspruch 1 oder 2 in Kombination mit einer Maschine, die eine rotierende oder oszillierende Bewegung ausführt.

10. Kombination nach Anspruch 9, wobei die Maschine einen Elektromotor oder Generator enthält; und
der mindestens eine rotierende Körper einen Rotor des Elektromotors oder Generators umfasst.

11. Kombination nach Anspruch 9, wobei die Drehbewegung des rotierenden Körpers als glattes Schwungrad wirkt.

12. Kombination nach Anspruch 9, zudem umfassend einen Riemen, der die Maschine mit dem mindestens einen rotierenden Körper verbindet, wobei der mindestens eine rotierende Körper eine Riemenscheibe umfasst, die mit dem Riemen verbunden ist.

13. Maschine nach Anspruch 9, wobei der rotierende Körper zahlreiche Schaufeln oder Blätter zum Gebrauch in einer Turbine, einem Propeller oder einer Schraube enthält.

14. Kombination nach Anspruch 9, wobei der rotierende Körper eine Verbindungsstange umfasst und die Maschine eine Antriebsmaschine oder Werkzeugmaschine umfasst.

15. Rotierender Körper nach Anspruch 1, wobei der rotierende Körper eine Mittenachse (2, 14, 18, 36) der Drehung oder oszillierenden Bewegung hat und der rotierende Körper einen fächerförmigen radialen Sektor umfasst, der bei allen beliebigen und allen vordefinierten Winkeln entlang der Mittenachse der Drehung oder oszillierenden Bewegung innerhalb des rotierenden Körpers bestimmt ist, wobei der Sektor einen kleinen Winkel und eine Dicke hat, die eine Gesamtdicke des rotierenden Körpers entlang der Mittenachse der Drehung oder oszillierenden Bewegung ausgleicht;
der fächerförmige radiale Sektor innerhalb des rotierenden Körpers sich zudem erstreckt von der Mittenachse der Drehung oder oszillierenden Bewegung zu einer externen äußersten radialen Fläche des rotierenden Körpers entlang des kleinen Winkels und der geringen Dicke;
der fächerförmige radiale Sektor eine Schwerpunkts-Teilachse (Gr 5) aufweist, die parallel zur Mittenachse der Drehung oder oszillierenden Bewegung ist;
der fächerförmige radiale Sektor zudem eine Teil-Hauptträgheitsachse (Fr 6) aufweist, die parallel zur Mittenachse der Drehung oder oszillierenden Bewegung ist; und
der fächerförmige radiale Sektor innerhalb des rotierenden Körpers eine Massenverteilung hat, bei der die beiden Teilachsen (Gr 5 und Fr 6) im Wesentlichen zusammenfallen.

16. Rotierender Körper nach Anspruch 15, wobei der rotierende Körper für die Energieumwandlung zwischen elektrischer Energie und mechanischer Energie verwendet wird.

17. Rotierender Körper nach Anspruch 15, wobei der rotierende Körper zahlreiche Schaufeln oder Blätter hat und der rotierende Körper zur Bewegung, zur Verdichtung, zur Umwandlung von Kraft oder zur Umwandlung von Energie eines Fluids verwendet wird, z. B. Luft, Gas, gasförmiger Brennstoff, Wasser oder Ö1.

18. Rotierender Körper nach Anspruch 15, wobei der rotierende Körper in einem Mechanismus verwendet wird, der geradlinige Bewegungen in Drehbewegungen umsetzt oder umgekehrt.

19. Rotierender Körper nach Anspruch 15, wobei der rotierende Körper in einem rotierenden Mechanismus einer Antriebsmaschine oder eines Kompressors verwendet wird.

20. Rotierender Körper nach Anspruch 15, wobei der rotierende Körper eine rotierende Welle enthält und die Mittenachse der Drehung des rotierenden Körpers eine Mittenachse der rotierenden Welle umfasst und die rotierende Welle eine Energieübertragungsfunktion hat.

21. Rotierender Körper nach Anspruch 15, wobei die Drehbewegung des rotierenden Körpers von zahlreichen Lagern unterstützt wird.

22. Rotierender Körper nach Anspruch 15 in Kombination mit einer Maschine, die eine rotierende oder oszillierende Bewegung ausführt.

23. Kombination nach Anspruch 22, wobei die Maschine einen Elektromotor oder Generator enthält; und
der mindestens eine rotierende Körper einen Rotor des Elektromotors oder Generators enthält.

24. Kombination nach Anspruch 22, wobei der rotierende Körper zudem ein Getriebe für die Übertragung von Kraft oder Energie enthält.

25. Maschine nach Anspruch 22, wobei der rotierende Körper zahlreiche Schaufeln oder Blätter zum Gebrauch in einer Turbine, einem Propeller oder einer Schraube enthält.

26. Kombination auch Anspruch 22, wobei der rotierende Körper eine Verbindungsstange umfasst und die Maschine eine Antriebsmaschine oder Werkzeugmaschine umfasst.

27. Rotierender Körper nach Anspruch 1, wobei
der rotierende Körper eine Drehachse (30) enthält, und ein Teil des Körpers eine exzentrische Achse zur Mittenachse der Drehung hat, und der Körper ferner einen fächerförmigen radialen Sektor umfasst, der bei allen beliebigen und allen vordefinierten Winkeln bestimmt ist, und der Sektor einen kleinen Winkel und eine geringe Dicke hat, wobei ein Radius senkrecht zur exzentrischen Achse steht;
sich der fächerförmige radiale Sektor zudem erstreckt von einem Spitzenpunkt, der die exzentrische Achse schneidet, zu einer externen äußersten radialen Fläche des rotierenden Körpers entlang des kleinen Winkels und der geringen Dicke, wobei die exzentrische Achse um die Mittenachse der Drehung rotiert;
der fächerförmige radiale Sektor eine Schwerpunkts-Teilachse (Gr 5) aufweist, die parallel zu exzentrischen Achse verläuft;
der fächerförmige radiale Sektor zudem eine Teil-Hauptträgheitsachse (Fr 6) aufweist, die parallel zur exzentrischen Achse ist; und
der fächerförmige radiale Sektor innerhalb des rotierenden Körpers eine Massenverteilung hat, in der die beiden Teilachsen (Gr 5 und Fr 6) im Wesentlichen zusammenfallen.

28. Rotierender Körper nach. Anspruch 27, wobei der rotierende Körper in einem rotierendes Mechanismus einer Antriebsmaschine oder eines Kompressors verwendet wird.

29. Rotierender Körper nach Anspruch 27, wobei der rotierende Körper eine rotierende Welle enthält und die Mittenachse der Drehung des rotierenden Körpers eine Mittenachse der rotierenden Welle umfasst und die rotierende Welle eine Energieübertragungsfunktion hat.

30. Rotierender Körper nach Anspruch 27, wobei die Drehbewegung des rotierenden Körpers von zahlreichen Lagern unterstützt wird.

31. Rotierender Körper nach Anspruch 27 in Kombination mit einer Maschine, die eine rotierende oder oszillierende Bewegung ausführt.

32. Kombination nach Anspruch 31, wobei der rotierende Körper einen Nocken oder eine Nockenwelle zum Öffnen oder Schließen eines Maschinenventils enthält.

33. Kombination nach Anspruch 31, wobei die Maschine einen Drehkolbenkompressor, eine Drehkolbenpumpe oder eine Drehkolben-Antriebsmaschine umfasst.

34. Rotierender Körper nach Anspruch 1, wobei
der rotierende Körper eine Drehachse (42) enthält, einen fächerförmigen rotierenden Abschnitt, der entlang der Mittenachse der Drehung verläuft, und einen fächerförmigen radialen Sektor, der bei allen beliebigen und allen vordefinierten Winkeln entlang der Mittenachse der Drehung innerhalb des Körpers bestimmt ist, wobei der Sektor einen kleinen Winkel und eine geringe Dicke hat und einen Radius senkrecht zur Mittenachse der Drehung, und sich der radiale Sektor weiterhin von der Mittenachse der Drehung zu einer externen äußersten radialen Fläche des rotierenden Körpers entlang des kleinen Winkels und der geringen Dicke erstreckt;
der fächerförmige radiale Sektor eine Schwerpunkts-Teilachse (Gr 5) aufweist, die parallel zur Mittenachse der Drehung ist;
der fächerförmige radiale Sektor zudem eine Teil-Hauptträgheitsachse (Fr 6) aufweist, die parallel zur Mittenachse der Drehung ist; und
der fächerförmige radiale Sektor innerhalb des rotierenden Körpers eine Massenverteilung hat, in der die beiden Teilachsen (Gr 5 und Fr 6) im Wesentlichen zusammenfallen.

35. Rotierender Körper nach Anspruch 34, wobei der rotierende Körper in einem Mechanismus verwendet wird, der geradlinige Bewegungen in Drehbewegungen umsetzt oder umgekehrt.

36. Rotierender Körper nach Anspruch 34, wobei der rotierende Körper in einem rotierenden Mechanismus einer Antriebsmaschine oder eines Kompressors verwendet wird.

37. Rotierender Körper nach Anspruch 34, wobei der rotierende Körper eine rotierende Welle enthält und die Mittenachse der Drehung des rotierenden Körpers eine Mittenachse der rotierenden Welle umfasst und die rotierende Welle eine Energieübertragungsfunktion hat.

38. Rotierender Körper nach Anspruch 34, wobei die Drehbewegung des rotierenden Körpers von zahlreichen Lagern unterstützt wird.

39. Rotierender Körper nach Anspruch 34 in Kombination mit einer Maschine, die eine rotierende oder oszillierende Bewegung ausführt.

40. Kombination nach Anspruch 39, wobei der rotierende Körper eine Kurbelwelle enthält und die Maschine eine Antriebsmaschine oder eine Werkzeugmaschine umfasst.

41. Rotierender Körper nach Anspruch 1, wobei
der rotierende Körper eine Drehachse (44) enthält, einen fächerförmigen rotierenden Abschnitt, der entlang der Mittenachse der Drehung verläuft, und einen fächerförmigen radialen Sektor, der bei allen beliebigen und allen vordefinierten Winkeln innerhalb des fächerförmigen rotierenden Abschnitts bestimmt ist und die Mittenachse der Drehung schneidet, und sich der radiale Sektor weiterhin von der Mittenachse der Drehung zu einer externen äußersten radialen Fläche des fächerförmigen rotierenden Abschnitts erstreckt;
der fächerförmige radiale Sektor eine Dicke umfasst, die gleich der Gesamtdicke des fächerförmigen rotierenden Abschnitts ist;
der fächerförmige radiale Sektor senkrecht zur Mittenachse der Drehung verläuft;
der fächerförmige radiale Sektor eine Schwerpunkts-Teilachse (Gr 5) aufweist, die parallel zur Mittenachse der Drehung ist;
der fächerförmige radiale Sektor zudem eine Teil-Hauptträgheitsachse (Fr 6) aufweist, die parallel zur Mittenachse der Drehung ist; und
der fächerförmige radiale Sektor innerhalb des rotierenden Körpers eine Massenverteilung hat, bei der die beiden Teilachsen (Gr 5 und Fr 6) im Wesentlichen zusammenfallen.

42. Rotierender Körper nach Anspruch 41, wobei der rotierende Körper in einem Mechanismus verwendet wird, der geradlinige Bewegungen in Drehbewegungen umsetzt oder umgekehrt.

43. Rotierender Körper nach Anspruch 41, wobei der rotierende Körper in einem rotierenden Mechanismus einer Antriebsmaschine oder eines Kompressors verwendet wird.

44. Rotierender Körper nach Anspruch 41, wobei der rotierende Körper eine rotierende Welle enthält und die Mittenachse der Drehung des rotierenden Körpers eine Mittenachse der rotierenden Welle umfasst und die rotierende Welle eine Energieübertragungsfunktion hat.

45. Rotierender Körper nach Anspruch 41, wobei die Drehbewegung des rotierenden Körpers von zahlreichen Lagern unterstützt wird.

46. Rotierender Körper nach Anspruch 41 in Kombination mit einer Maschine, die eine rotierende oder oszillierende Bewegung ausführt.

47. Kombination nach Anspruch 46, wobei der rotierende Körper eine Kurbelwelle enthält und die Maschine eine Antriebsmaschine oder eine Werkzeugmaschine umfasst.

48. Kombination nach Anspruch 47, wobei
die Kurbelwelle mindestens einen Lagerzapfenabschnitt enthält, der die Kurbelwelle drehend trägt;
der mindestens eine Lagerzapfenabschnitt mindestens ein zylindrisches Loch in sich enthält, damit die Energieverluste geringer werden.

49. Kombination nach Anspruch 48, wobei der mindestens eine Lagerzapfenabschnitt zudem mindestens ein fächerförmiges Ölloch umfasst, das das mindestens eine zylindrische Loch mit einer Außenfläche des mindestens einen Lagerzapfenabschnitts verbindet.

50. Kombination nach Anspruch 47, wobei
die Kurbelwelle mindestens einen Lagerzapfenabschnitt enthält, der die Kurbelwelle drehend trägt;
der mindestens eine Lagerzapfenabschnitt mindestens ein zylindrisches Loch in sich enthält, damit die Energieverluste geringer werden.

51. Kombination nach Anspruch 50, wobei der mindestens eine Lagerzapfenabschnitt zudem mindestens ein fächerförmiges Ölloch umfässt, das das mindestens eine zylindrische Loch mit einer Außenfläche des mindestens einen Lagerzapfenabschnitts verbindet.

## Revendications

1. Corps rotatif effectuant un mouvement de rotation ou de basculement et qui est équilibré statiquement ou dynamiquement, afin de réduire les vibrations mécaniques, **caractérisé en ce que** ledit corps rotatif comprend :
un axe central du mouvement de rotation ou de basculement, qui est une ligne imaginaire de l'axe X ou un arbre autour duquel ledit corps rotatif tourne ou bascule autour de lui-même ; et
un segment rotatif autour dudit axe central ;
ledit segment rotatif présentant un centre de gravité de segment ;
ledit segment rotatif présentant, par ailleurs, un axe d'inertie principal du segment parallèle audit axe central ; et
ledit segment rotatif présentant une distribution massique dans laquelle la déviation définie comme étant la différence entre ledit centre de gravité du segment et ledit axe d'inertie principal du segment est sensiblement réduite ou essentiellement éliminée.

2. Corps rotatif selon la revendication 1, dans lequel:
ledit corps rotatif présente un axe central du mouvement de rotation ou de basculement qui est une ligne imaginaire autour de laquelle ledit corps rotatif tourne ou bascule autour de lui-même ; axe X des figures 4, 5, 6, 16;
ledit corps rotatif comprenant un segment radial en forme d'éventail (4, 7, 8) défini suivant tout et tous les angles prédéfinis le long dudit axe central du mouvement de rotation ou de basculement dans ledit corps rotatif, ledit segment radial en forme d'éventail ayant un faible angle et une faible épaisseur, de sorte qu'un rayon dudit segment radial en forme d'éventail soit perpendiculaire audit axe central du mouvement de rotation ou de basculement ;
ledit segment radial en forme d'éventail à l'intérieur dudit corps rotatif s'étendant, par ailleurs, dudit axe central du mouvement de rotation ou de basculement à une surface radiale extrême extérieure dudit corps rotatif le long dudit faible angle et de ladite faible épaisseur ;
ledit segment radial en forme d'éventail (4, 7, 8) ayant un axe de centre de gravité partiel (Gr 5) parallèle audit axe central du mouvement de rotation ou de basculement ;
ledit segment radial en forme d'éventail ayant, par ailleurs, un axe d'inertie principal partiel (Fr 6) parallèle audit axe central du mouvement de rotation ou de basculement ; et
ledit segment radial en forme d'éventail à l'intérieur dudit corps rotatif présentant une distribution massique dans laquelle ledit centre de gravité partiel (Gr 5) et ledit axe d'inertie principal partiel (Fr 6) sont sensiblement conjugués.

3. Corps rotatif selon la revendication 1 ou 2, dans lequel ledit corps rotatif est utilisé dans la conversion d'énergie entre une énergie électrique et une énergie mécanique.

4. Corps rotatif selon la revendication 1 ou 2, dans lequel ledit corps rotatif comprend plusieurs aubes ou pales et dans lequel ledit corps rotatif est utilisé dans le déplacement, la compression, la conversion de force, ou la conversion de puissance d'un fluide, tel que de l'air, de la vapeur, un combustible gazeux, de l'eau ou de l'huile.

5. Corps rotatif selon la revendication 1 ou 2, dans lequel ledit corps rotatif est utilisé dans un mécanisme qui réalise la conversion entre un mouvement linéaire et un mouvement rotatif.

6. Corps rotatif selon la revendication 1 ou 2, dans lequel ledit corps rotatif est utilisé dans un mécanisme rotatif d'une machine motrice ou d'un compresseur.

7. Corps rotatif selon la revendication 1 ou 2, dans lequel ledit corps rotatif comprend un arbre rotatif, ledit axe central de rotation dudit corps rotatif comprend un axe central dudit arbre rotatif et dans lequel ledit arbre rotatif a une fonction de transmission de puissance.

8. Corps rotatif selon la revendication 1 ou 2, dans lequel le mouvement rotatif dudit corps rotatif est supporté par plusieurs roulements.

9. Corps rotatif selon la revendication 1 ou 2, en combinaison avec une machine qui effectue un mouvement de rotation ou de basculement.

10. Combinaison selon la revendication 9, dans laquelle ladite machine comprend un moteur électrique ou un générateur ; et
ledit au moins un corps rotatif comprend un rotor dudit moteur électrique ou générateur.

11. Combinaison selon la revendication 9, dans laquelle le mouvement rotatif dudit corps rotatif fonctionne comme un volant lisse.

12. Combinaison selon la revendication 9, comprenant, par ailleurs, une courroie destinée à interconnecter ladite machine avec ledit au moins un corps rotatif, dans laquelle ledit au moins un corps rotatif comprend une poulie connectée à ladite courroie.

13. Machine selon la revendication 9, dans laquelle ledit corps rotatif comprend plusieurs aubes ou pales destinées à être utilisées dans une turbine, une hélice ou une vis.

14. Combinaison selon la revendication 9, dans laquelle ledit corps rotatif comprend une biellette et ladite machine comprend une machine motrice ou une machine-outil.

15. Corps rotatif selon la revendication 1, dans lequel :
ledit corps rotatif présente un axe central (2, 14, 18, 36) du mouvement de rotation ou de basculement, ledit corps rotatif comprenant un segment radial en forme d'éventail défini suivant tout et tous les angles prédéfinis le long dudit axe central du mouvement de rotation ou de basculement dans ledit corps rotatif, ledit segment ayant un faible angle et une épaisseur égalant une épaisseur totale dudit corps rotatif le long dudit axe central du mouvement de rotation ou de basculement ;
ledit segment radial en forme d'éventail à l'intérieur dudit corps rotatif s'étendant, par ailleurs, dudit axe central du mouvement de rotation ou de basculement à une surface radiale extrême extérieure dudit corps rotatif le long dudit faible angle et de ladite faible épaisseur ;
ledit segment radial en forme d'éventail ayant un axe de centre de gravité partiel (Gr 5) parallèle audit axe central du mouvement de rotation ou de basculement ;
ledit segment radial en forme d'éventail ayant, par ailleurs, un axe d'inertie principal partiel (Fr 6) parallèle audit axe central du mouvement de rotation ou de basculement ; et
ledit segment radial en forme d'éventail à l'intérieur dudit corps rotatif présentant une distribution massique dans laquelle lesdits deux axes partiels (Gr 5 et Fr 6) sont sensiblement conjugués.

16. Corps rotatif selon la revendication 15, dans lequel ledit corps rotatif est utilisé dans la conversion d'énergie entre une énergie électrique et une énergie mécanique.

17. Corps rotatif selon la revendication 15, dans lequel ledit corps rotatif comprend plusieurs aubes ou pales et dans lequel ledit corps rotatif est utilisé dans le déplacement, la compression, la conversion de force, ou la conversion de puissance d'un fluide, tel que de l'air, de la vapeur, un combustible gazeux, de l'eau ou de l'huile.

18. Corps rotatif selon la revendication 15, dans lequel ledit corps rotatif est utilisé dans un mécanisme qui réalise la conversion entre un mouvement linéaire et un mouvement rotatif.

19. Corps rotatif selon la revendication 15, dans lequel ledit corps rotatif est utilisé dans un mécanisme rotatif d'une machine motrice ou d'un compresseur.

20. Corps rotatif selon la revendication 15, dans lequel ledit corps rotatif comprend un arbre rotatif, ledit axe central de rotation dudit corps rotatif comprend un axe central dudit arbre rotatif et dans lequel ledit arbre rotatif a une fonction de transmission de puissance.

21. Corps rotatif selon la revendication 15, dans lequel le mouvement rotatif dudit corps rotatif est supporté par plusieurs roulements.

22. Corps rotatif selon la revendication 15, en combinaison avec une machine qui effectue un mouvement de rotation ou de basculement.

23. Combinaison selon la revendication 22, dans laquelle ladite machine comprend un moteur électrique ou un générateur ; et
ledit au moins un corps rotatif comprend un rotor dudit moteur électrique ou générateur .

24. Combinaison selon la revendication 22, dans laquelle ledit corps rotatif comprend, par ailleurs, un engrenage pour la transmission de force ou de puissance.

25. Machine selon la revendication 22, dans laquelle ledit corps rotatif comprend plusieurs aubes ou pales destinées à être utilisées dans une turbine, une hélice ou une vis.

26. Combinaison selon la revendication 22, dans laquelle ledit corps rotatif comprend une biellette et ladite machine comprend une machine motrice ou une machine-outil.

27. Corps rotatif selon la revendication 1, dans lequel :
ledit corps rotatif comprend un axe (30) de rotation, dans lequel une partie dudit corps présente un axe excentré parallèle audit axe central de rotation, ledit corps rotatif comprenant un segment radial en forme d'éventail défini suivant tout et tous les angles prédéfinis, ledit segment ayant un faible angle et une épaisseur avec un rayon perpendiculaire audit axe excentré ;
ledit segment radial en forme d'éventail s'étendant, par ailleurs, d'une pointe de sommet venant en intersection avec ledit axe excentré à une surface radiale extrême extérieure dudit corps rotatif le long dudit faible angle et de ladite faible épaisseur, dans lequel ledit axe excentré tourne autour dudit axe central de rotation ;
ledit segment radial en forme d'éventail ayant un axe de centre de gravité partiel (Gr 5) parallèle audit axe excentré ;
ledit segment radial en forme d'éventail comprenant, par ailleurs, un axe d'inertie principal partiel (Fr 6) parallèle audit axe excentré ; et
ledit segment radial en forme d'éventail à l'intérieur dudit corps rotatif comprenant une distribution massique dans laquelle lesdits deux axes partiels (Gr 5 et Fr 6) sont sensiblement conjugués.

28. Corps rotatif selon la revendication 27, dans lequel ledit corps rotatif est utilisé dans un mécanisme rotatif d'une machine motrice ou d'un compresseur.

29. Corps rotatif selon la revendication 27, dans lequel ledit corps rotatif comprend un arbre rotatif, ledit axe central de rotation dudit corps rotatif comprend un axe central dudit arbre rotatif et dans lequel ledit arbre rotatif a une fonction de transmission de puissance.

30. Corps rotatif selon la revendication 27, dans lequel le mouvement rotatif dudit corps rotatif est supporté par plusieurs roulements.

31. Corps rotatif selon la revendication 27, en combinaison avec une machine qui effectue un mouvement de rotation ou de basculement.

32. Combinaison selon la revendication 31, dans laquelle ledit corps rotatif comprend une came ou un arbre à cames destiné à ouvrir ou fermer une soupape de moteur.

33. Combinaison selon la revendication 31, dans laquelle ladite machine comprend un compresseur à piston rotatif, une pompe à piston rotatif ou une machine motrice à piston rotatif.

34. Corps rotatif selon la revendication 1, dans lequel :
ledit corps rotatif comprend un axe (42) de rotation, une partie rotative en forme d'éventail s'étendant le long dudit axe de rotation central, et un segment radial en forme d'éventail défini suivant tout et tous les angles prédéfinis le long dudit axe de rotation central dans ledit corps rotatif, ledit segment ayant un faible angle, une faible épaisseur et un rayon perpendiculaire audit axe de rotation central, ledit segment radial s'étendant, par ailleurs, dudit axe de rotation central à une surface radiale extrême extérieure dudit corps rotatif le long dudit faible angle et de ladite faible épaisseur ;
ledit segment radial en forme d'éventail ayant un axe de centre de gravité partiel (Gr 5) parallèle audit axe de rotation central ;
ledit segment radial en forme d'éventail comprenant, par ailleurs, un axe d'inertie principal partiel (Fr 6) parallèle audit axe de rotation central ; et
ledit segment radial en forme d'éventail à l'intérieur dudit corps rotatif comprenant une distribution massique dans laquelle lesdits deux axes partiels (Gr 5 et Fr 6) sont sensiblement conjugués.

35. Corps rotatif selon la revendication 34, dans lequel ledit corps rotatif est utilisé dans un mécanisme qui réalise la conversion entre un mouvement linéaire et un mouvement rotatif.

36. Corps rotatif selon la revendication 34, dans lequel ledit corps rotatif est utilisé dans un mécanisme rotatif d'une machine motrice ou d'un compresseur.

37. Corps rotatif selon la revendication 34, dans lequel ledit corps rotatif comprend un arbre rotatif, ledit axe central de rotation dudit corps rotatif comprend un axe central dudit arbre rotatif et dans lequel ledit arbre rotatif a une fonction de transmission de puissance.

38. Corps rotatif selon la revendication 34, dans lequel le mouvement rotatif dudit corps rotatif est supporté par plusieurs roulements.

39. Corps rotatif selon la revendication 34, en combinaison avec une machine qui effectue un mouvement de rotation ou de basculement.

40. Combinaison selon la revendication 39, dans laquelle ledit corps rotatif comprend une bielle et ladite machine comprend une machine motrice ou une machine-outil.

41. Corps rotatif selon la revendication 1, dans lequel :
ledit corps rotatif comprend un axe (44) de rotation, une partie rotative en forme d'éventail s'étendant le long dudit axe de rotation central, et un segment radial en forme d'éventail défini suivant tout et tous les angles prédéfinis dans ladite partie rotative en forme d'éventail et venant en intersection avec ledit axe de rotation central, ledit segment radial s'étendant, par ailleurs, dudit axe de rotation central à une surface radiale extrême extérieure de ladite partie rotative en forme d'éventail ;
ledit segment radial en forme d'éventail comprenant une épaisseur égale à une épaisseur totale de ladite partie rotative en forme d'éventail ;
ledit segment radial en forme d'éventail s'étendant perpendiculaire audit axe de rotation central ;
ledit segment radial en forme d'éventail comprenant un axe de centre de gravité partiel (Gr 5) parallèle audit axe de rotation central ;
ledit segment radial en forme d'éventail comprenant, par ailleurs, un axe d'inertie principal partiel (Fr 6) parallèle audit axe de rotation central ; et
ledit segment radial en forme d'éventail à l'intérieur dudit corps rotatif comprenant une distribution massique dans laquelle lesdits deux axes partiels (Gr 5 et Fr 6) sont sensiblement conjugués.

42. Corps rotatif selon la revendication 41, dans lequel ledit corps rotatif est utilisé dans un mécanisme qui réalise la conversion entre un mouvement linéaire et un mouvement rotatif.

43. Corps rotatif selon la revendication 41, dans lequel ledit corps rotatif est utilisé dans un mécanisme rotatif d'une machine motrice ou d'un compresseur.

44. Corps rotatif selon la revendication 41, dans lequel ledit corps rotatif comprend un arbre rotatif, ledit axe central de rotation dudit corps rotatif comprend un axe central dudit arbre rotatif et dans lequel ledit arbre rotatif a une fonction de transmission de puissance.

45. Corps rotatif selon la revendication 41, dans lequel le mouvement rotatif dudit corps rotatif est supporté par plusieurs roulements.

46. Corps rotatif selon la revendication 41, en combinaison avec une machine qui effectue un mouvement de rotation ou de basculement.

47. Combinaison selon la revendication 46, dans laquelle ledit corps rotatif comprend une bielle et ladite machine comprend une machine motrice ou une machine-outil.

48. Combinaison selon la revendication 47, dans laquelle ladite bielle comprend au moins un segment de portée destiné à supporter de manière rotative ladite bielle ;
ledit au moins un segment de portée comprenant au moins un trou cylindrique, afin de réduire la perte de puissance.

49. Combinaison selon la revendication 48, dans laquelle ledit au moins un segment de portée comprend, par ailleurs, au moins un trou à huile en forme d'éventail reliant ledit au moins un trou cylindrique à une surface extérieure dudit au moins un segment de portée.

50. Combinaison selon la revendication 47, dans laquelle ladite bielle comprend au moins un segment de portée destiné à supporter de manière rotative ladite bielle ;
ledit au moins un segment de portée comprenant au moins un trou cylindrique, afin de réduire la perte de puissance.

51. Combinaison selon la revendication 50, dans laquelle ledit au moins un segment de portée comprend, par ailleurs, au moins un trou à huile en forme d'éventail reliant ledit au moins un trou cylindrique à une surface extérieure dudit au moins un segment de portée.
